(19) Europäisches Patentamt / European Patent Office / Office européen des brevets

(11) **EP 3 355 261 A1**

(12) **EUROPEAN PATENT APPLICATION**
published in accordance with Art. 153(4) EPC

(43) Date of publication:
**01.08.2018 Bulletin 2018/31**

(51) Int Cl.:
*G06Q 50/18* (2012.01)   *G06F 17/30* (2006.01)

(21) Application number: **16848329.5**

(22) Date of filing: **23.09.2016**

(86) International application number:
**PCT/JP2016/004317**

(87) International publication number:
**WO 2017/051538 (30.03.2017 Gazette 2017/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.09.2015  JP 2015188696**

(71) Applicant: **NEC Patent Service,Ltd.**
**Kawasaki-shi, Kanagawa 211-8666 (JP)**

(72) Inventors:
• **GOTOH, Tomohisa**
  **Kawasaki-shi**
  **Kanagawa 211-8666 (JP)**
• **MORIOKA, Yukiko**
  **Kawasaki-shi**
  **Kanagawa 211-8666 (JP)**
• **HOKKYO, Hirotaka**
  **Kawasaki-shi**
  **Kanagawa 211-8666 (JP)**
• **ODA, Mikio**
  **Kawasaki-shi**
  **Kanagawa 211-8666 (JP)**
• **NAKAGAWA, Yuji**
  **Kawasaki-shi**
  **Kanagawa 211-8666 (JP)**

(74) Representative: **Vossius & Partner**
**Patentanwälte Rechtsanwälte mbB**
**Siebertstrasse 3**
**81675 München (DE)**

(54) **INFORMATION-PROCESSING DEVICE, INFORMATION-PROCESSING METHOD, AND PROGRAM-RECORDING MEDIUM**

(57) The present invention provides an information processing device and the like capable of facilitating confirmation of a claim structure even when the number of claims is large. The information processing device includes subordinate relationship extraction means for extracting a claim number and a subordinate relationship between claims from claim data including a plurality of claims; and relationship diagram generation means for generating, based on the subordinate relationship between claims, a relationship diagram in which the claim number is disposed on or in a periphery of circularly-arranged points or a circling line.

Fig. 36

INFORMATION PROCESSING DEVICE (700)
- SUBORDINATE RELATIONSHIP EXTRACTION UNIT (710)
- RELATIONSHIP DIAGRAM GENERATION UNIT (720)

EP 3 355 261 A1

**Description**

[Technical Field]

The present invention relates to an information processing device, an information processing method, and a program-recording medium.

[Background Art]

A document for a patent application includes a description, a scope of claim for patent, drawings, or an abstract attached to an application request. The description is a document in which a patent applicant describes a patent sufficiently to an extent that an expert of a technical field thereof can carry out the patent. The scope of claim for patent is a description of a matter for defining an invention intended to be patented or a document that describes the matter. In the scope of claim for patent, one or a plurality of claims are described.

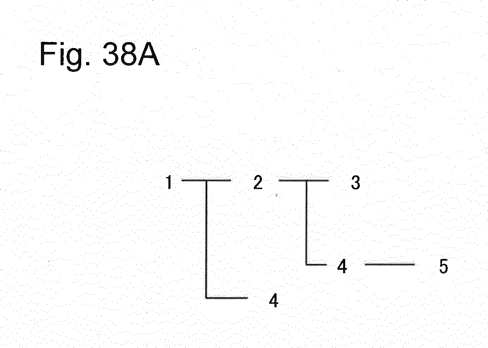

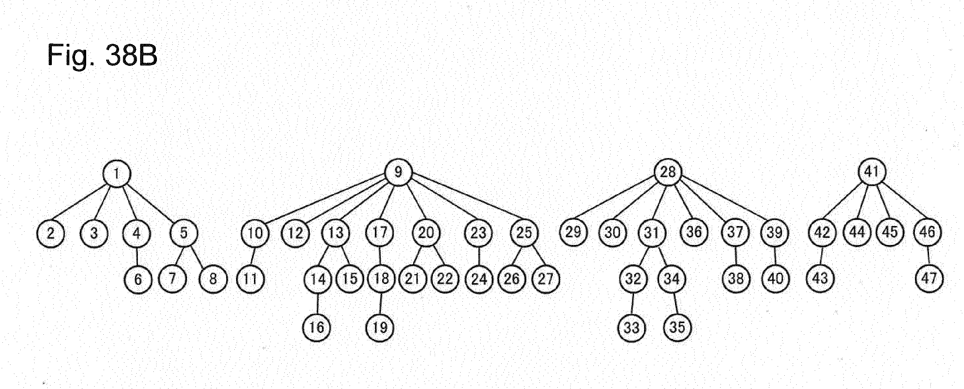

A plurality of claims included in the scope of claim for patent have a relationship, specifically a subordinate relationship with one another. The subordinate relationship between claims is displayed generally using a claim tree. Figs. 38A and 38B are each a diagram illustrating a display example of a claim tree. As illustrated in Figs. 38A and 38B, a claim tree is displayed, for example, with a hierarchical structure. As illustrated in Fig. 38A, for example, there is a method for displaying a depth of hierarchy from an independent claim in a lateral direction and a number of a dependent claim for each hierarchy level in a vertical direction. Alternatively, as illustrated in Fig. 38B, there is also a display method using a tree structure in which independent claims are disposed as a root in a transverse direction and a dependent claim of each independent claim is evenly disposed in a vertical direction of the independent claim.

PTL 1 discloses an automation tool for supporting a user by processing and analyzing patent related information and non-patent related information. PTL 1 discloses an example in which a claim structure is displayed by a hyperbolic tree including a root node and a plurality of additional nodes directly or indirectly connected to the root node.

[Citation List]

[Patent Literature]

PTL 1: Japanese Laid-open Patent Publication No. 2011-154696

[Summary of Invention]

[Technical Problem]

As described above, when a method for displaying a subordinate relationship between claims using a hierarchical structure, in which, for example, the depth of hierarchy from an independent claim is expressed in arrangement in a transverse direction or a vertical direction, is employed, as the number of claims included in the scope of claim for patent increases, an area for displaying a claim tree increases. Therefore, there is an issue that it is difficult to confirm a claim structure.

In view of the above-described issue, the present invention has been made, and a main object of the present invention is to provide an information processing device and the like capable of facilitating confirmation of a claim structure even when the number of claims included in the scope of claim for patent is large.

[Solution to Problem]

An information processing device according to one aspect of the present invention includes:

subordinate relationship extraction means for extracting a claim number and a subordinate relationship between claims from claim data including a plurality of claims; and
relationship diagram generation means for generating, based on the subordinate relationship between claims, a relationship diagram in which the claim number is disposed on or in a periphery of circularly-arranged points or a circling line.

An information processing method according to one aspect of the present invention includes:

extracting a claim number and a subordinate relationship between claims from claim data including a plurality of claims; and
generating, based on the subordinate relationship between claims, a relationship diagram in which the claim number is disposed on or in a periphery of circularly-arranged points or a circling line.

A storage medium according to one aspect of the present invention stores an information processing program that causes a computer to execute:

a process of extracting a claim number and a subordinate relationship between claims from claim data including a plurality of claims; and
a process of generating, based on the subordinate relationship between claims, a relationship diagram in which the claim number is disposed on or in a periphery of circularly-arranged points or a circling line.

[Advantageous Effects of Invention]

The present invention has an advantageous effect that, even when the number of claims included in the scope of claim for patent is large, it is possible to facilitate confirmation of a claim structure thereof, is obtained.

[Brief Description of Drawings]

Fig. 1 is a block diagram illustrating a configuration of an information processing device according to a first example embodiment of the present invention.
Fig. 2 is a diagram illustrating an example of claim data stored on a claim data storage unit of the information processing device according to the first example embodiment of the present invention.
Fig. 3 is a flowchart illustrating processing of the information processing device according to the first example embodiment of the present invention.
Fig. 4A is a diagram illustrating one example of a subordinate relationship between claims extracted by the information processing device according to the first example embodiment of the present invention.
Fig. 4B is a diagram illustrating one example of a symmetric matrix generated, based on a subordinate relationship between claims extracted by the information processing device according to the first example embodiment of the present invention.
Fig. 5A is a diagram illustrating one example of a subordinate relationship between claims extracted by the information processing device according to the first example embodiment of the present invention.
Fig. 5B is a diagram illustrating one example of a symmetric matrix generated, based on a subordinate relationship between claims extracted by the information processing device according to the first example embodiment of the present invention.
Fig. 6 is a flowchart illustrating processing of generating disposition data by a claim tree generation unit of the information processing device according to the first example embodiment of the present invention.
Fig. 7 is a diagram illustrating one example of a symmetric matrix generated by the information processing device according to the first example embodiment of the present invention.
Fig. 8 is a diagram illustrating one example of a symmetric matrix regarding claim data including a multiple dependent claim generated by the information processing device according to the first example embodiment of the present invention.
Fig. 9 is a diagram illustrating an example in which node circles and a link are disposed by the information processing device according to the first example embodiment of the present invention.
Fig. 10A is a diagram illustrating basic circle data in disposition data generated by the information processing device according to the first example embodiment of the present invention.
Fig. 10B is a diagram illustrating node circle data in disposition data generated by the information processing device according to the first example embodiment of the present invention.
Fig. 10C is a diagram illustrating link data in disposition data generated by the information processing device according to the first example embodiment of the present invention.
Fig. 11 is a diagram illustrating in detail movement of a node according to the information processing device according to the first example embodiment of the present invention.
Fig. 12A is a diagram illustrating node circle data in disposition data including a coordinate value adjusted by the information processing device according to the first example embodiment of the present invention.
Fig. 12B is a diagram illustrating link data in disposition data including a coordinate value adjusted by the information processing device according to the first example embodiment of the present invention.

Fig. 13A is a diagram illustrating one example of a claim tree displayed using a coordinate value adjusted by the information processing device according to the first example embodiment of the present invention.

Fig. 13B is a diagram illustrating one example of a claim tree displayed by the information processing device according to the first example embodiment of the present invention.

Fig. 13C is a diagram illustrating one example of a claim tree displayed by the information processing device according to the first example embodiment of the present invention.

Fig. 14 is a block diagram illustrating a configuration of an information processing device according to a second example embodiment of the present invention.

Fig. 15A is a diagram illustrating one example of subordinate relationship information including a depth of hierarchy extracted by the information processing device according to the second example embodiment of the present invention.

Fig. 15B is a diagram illustrating one example of display form data generated by the information processing device according to the second example embodiment of the present invention.

Fig. 16 is a diagram illustrating one example of a claim tree including hierarchical information generated by the information processing device according to the second example embodiment of the present invention.

Fig. 17 is a block diagram illustrating a configuration of an information processing device according to a third example embodiment of the present invention.

Fig. 18 is a diagram illustrating one example of subordinate relationship information including category information extracted by the information processing device according to the third example embodiment of the present invention.

Fig. 19A is a diagram illustrating one example of display form data generated by the information processing device according to the third example embodiment of the present invention.

Fig. 19B is a diagram illustrating one example of display form data generated by the information processing device according to the third example embodiment of the present invention.

Fig. 20 is a diagram illustrating one example of a claim tree including category information generated by the information processing device according to the third example embodiment of the present invention.

Fig. 21 is a diagram illustrating one example of a claim tree including category information generated by the information processing device according to the third example embodiment of the present invention.

Fig. 22A is a diagram illustrating one example of basic polygon data in disposition data generated by the information processing device according to the third example embodiment of the present invention.

Fig. 22B is a diagram illustrating one example of side data in disposition data generated by the information processing device according to the third example embodiment of the present invention.

Fig. 22C is a diagram illustrating one example of side data in disposition data generated by the information processing device according to the third example embodiment of the present invention.

Fig. 23 is a diagram illustrating one example of a claim tree including category information generated by the information processing device according to the third example embodiment of the present invention.

Fig. 24A is a diagram illustrating one example of a claim tree including category information generated by the information processing device according to the third example embodiment of the present invention.

Fig. 24B is a diagram illustrating one example of a claim tree including category information generated by the information processing device according to the third example embodiment of the present invention.

Fig. 24C is a diagram illustrating one example of a claim tree including category information generated by the information processing device according to the third example embodiment of the present invention.

Fig. 25 is a block diagram illustrating a configuration of an information processing device according to a fourth example embodiment of the present invention.

Fig. 26A is a diagram illustrating one example of subordinate relationship information including similarity information extracted by the information processing device according to the fourth example embodiment of the present invention.

Fig. 26B is a diagram illustrating one example of similarity data extracted by the information processing device according to the fourth example embodiment of the present invention.

Fig. 27 is a diagram illustrating one example of a claim tree including similarity information extracted by the information processing device according to the fourth example embodiment of the present invention.

Fig. 28 is a diagram exemplarily illustrating a claim tree displayed by an information processing device according to a fifth example embodiment of the present invention.

Fig. 29 is a block diagram illustrating a configuration of an information processing device according to a sixth example embodiment of the present invention.

Fig. 30 is a diagram illustrating an example of the number of nodes and a link number extracted from the information processing device according to the sixth example embodiment of the present invention.

Fig. 31 is a diagram illustrating one example of a graph regarding a link number generated by the information processing device according to the sixth example embodiment of the present invention.

Fig. 32 is a diagram illustrating one example of a graph regarding a network density generated by the information processing device according to the sixth example embodiment of the present invention.

Fig. 33 is a diagram illustrating one example of a graph regarding an average inter-vertex distance generated by the information processing device according to the sixth example embodiment of the present invention.

Fig. 34 is a diagram illustrating one example of a graph regarding a cluster number generated by the information processing device according to the sixth example embodiment of the present invention.

Fig. 35 is a diagram illustrating one example of a graph display screen according to the information processing device according to the sixth example embodiment of the present invention.

Fig. 36 is a block diagram illustrating a configuration of an information processing device according to a seventh example embodiment of the present invention.

Fig. 37 is a diagram exemplarily illustrating a hardware configuration of a device according to each example embodiment.

Fig. 38A is a diagram illustrating one example of a claim tree.

Fig. 38B is a diagram illustrating one example of a claim tree.

[Description of Embodiments]

Hereinafter, example embodiments of the present invention will be described in detail with reference to the accompanying drawings.

First Example Embodiment

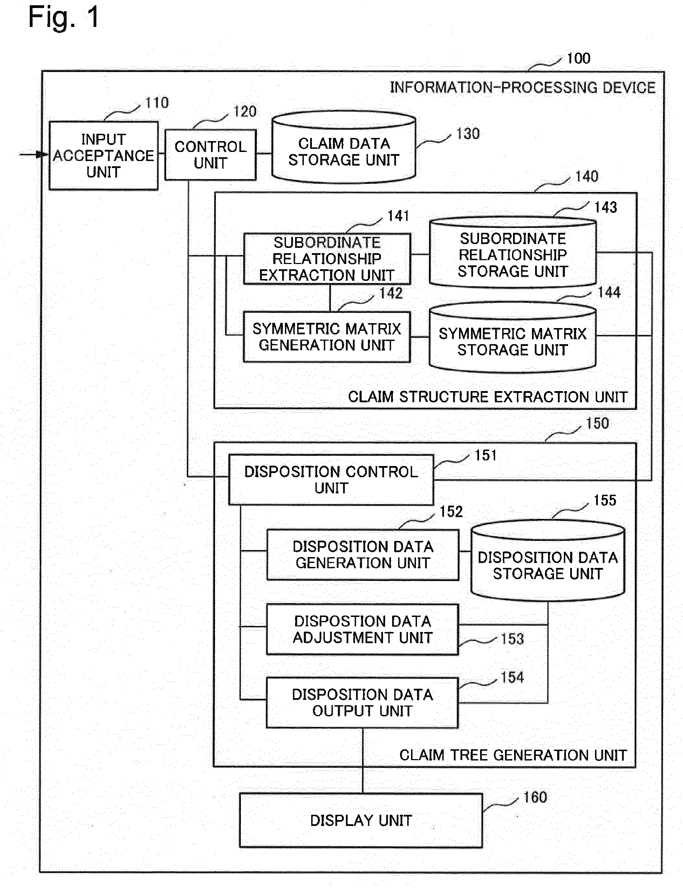

Fig. 1 is a block diagram illustrating a configuration of an information processing device 100 according to a first example embodiment of the present invention. The information processing device 100 is a device that displays, by a tree structure, a subordinate relationship (claim structure) between one or a plurality of claims included in the scope of claim for patent in such a way that a user can easily confirm the subordinate relationship. A diagram indicating a subordinate relationship between claims by a tree structure is generally referred to as a claim tree.

As illustrated in Fig. 1, the information processing device 100 includes an input acceptance unit 110, a control unit 120, a claim data storage unit 130, a claim structure extraction unit 140, a claim tree generation unit 150, and a display unit 160.

The claim structure extraction unit 140 includes a subordinate relationship extraction unit 141, a symmetric matrix generation unit 142, a subordinate relationship storage unit 143, and a symmetric matrix storage unit 144.

The claim tree generation unit 150 includes a disposition control unit 151, a disposition data generation unit 152, a disposition data adjustment unit 153, a disposition data output unit 154, and a disposition data storage unit 155.

An outline of each component will be described.

The input acceptance unit 110 accepts a selection instruction for claim data to be analyzed that are data indicating the scope of claim for patent including one or a plurality of claims, a display instruction for a claim tree, and the like. The input acceptance unit 110 is realized by an input means such as a mouse or a keyboard, a driver software for the input means, and the like.

The control unit 120 executes processing in accordance with an instruction accepted by the input acceptance unit 110. The control unit 120, for example, reads claim data to be analyzed from the claim data storage unit 130, and notifies the claim structure extraction unit 140 of the read data and also instructs the claim structure extraction unit 140 to extract a claim structure.

The claim data storage unit 130 stores one or a plurality of pieces of claim data in advance. One piece of claim data includes all claims included in the scope of claim for patent attached to one application but is not limited thereto. One piece of claim data may include a part of claims included in the scope of claim for patent attached to one application. Claim data may be, for example, Excel (a registered trademark) data in which all claims described in the scope of claim for patent attached to one application are described in one cell. Further, claim data may be Excel data in which claims included in scopes of claim for patent attached to a plurality of application are described in respective cells (each cell corresponding to each scope of claim for patent).

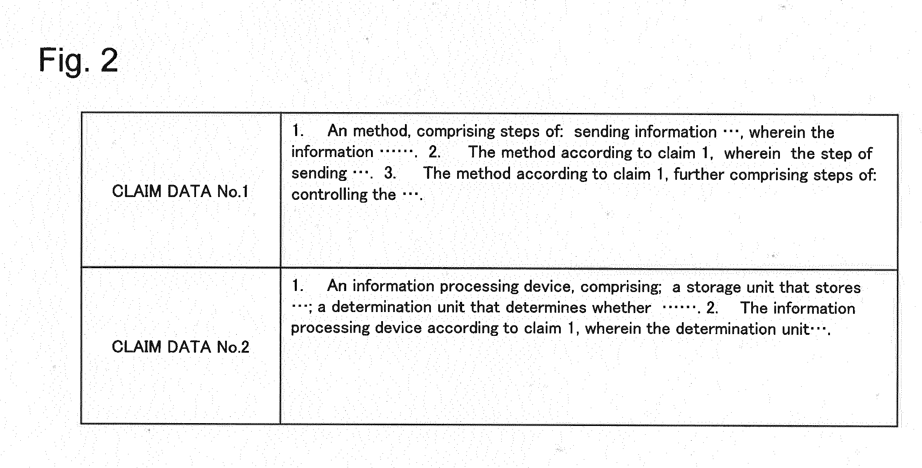

Fig. 2 is a diagram illustrating an example of claim data stored on the claim data storage unit 130. As illustrated in Fig. 2, a language for describing claim data may be English, Japanese, or any other language. In Fig. 2, a plurality of pieces of claim data (claim data No. 1 and claim data No. 2) are illustrated. The claim data No. 1 and the claim data No. 2 each include, for example, all claims included in the scope of claim for patent attached to one application. The claim data No. 1 include a claim 1, a claim 2, and a claim 3. The claim 1 is an independent claim, and the claim 2 and the claim 3 are each a dependent claim dependent on the claim 1.

A user may select one piece of claim data as an analysis target via the input acceptance unit 110 or may select a plurality of pieces of claim data. When a plurality of pieces of claim data have been selected, for each piece of claim data, data for displaying a claim tree are generated.

The claim data storage unit 130 may be disposed inside the information processing device 100 or may be disposed in the outside and communicably connected to the information processing device 100.

The claim structure extraction unit 140 extracts a claim structure from one or a plurality of pieces of claim data received from the control unit 120. The subordinate relationship extraction unit 141 of the claim structure extraction unit 140 extracts a subordinate relationship between claims included in the received claim data. The subordinate relationship extraction unit 141 extracts, when receiving a plurality of pieces of claim data, a subordinate relationship between claims for each piece of claim data. The subordinate relationship storage unit 143 stores information (subordinate relationship information) indicating the subordinate relationship extracted by the subordinate relationship extraction unit 141.

The symmetric matrix generation unit 142 generates a symmetric matrix indicating presence or absence of a subordinate relationship between claims, based on the subordinate relationship extracted by the subordinate relationship extraction unit 141. The symmetric matrix storage unit 144 stores the symmetric matrix generated by the symmetric matrix generation unit 142.

The claim tree generation unit 150 generates data for displaying a claim tree, based on the subordinate relationship between claims and the symmetric matrix extracted by the claim structure extraction unit 140, and outputs the data to the display unit 160. The display unit 160 may be, for example, a display means such as a screen included in the information processing device 100 or an external display means communicably connected to the information processing device 100.

The disposition control unit 151 of the claim tree generation unit 150 reads, from the subordinate relationship storage unit 143 and the symmetric matrix storage unit 144, a subordinate relationship and a symmetric matrix, respectively and executes control for claim tree display.

The disposition data generation unit 152 calculates, based on the subordinate relationship and the symmetric matrix, a disposition location (coordinate value) and the like on a display screen of each claim in a claim tree to be displayed and generates disposition data for disposition based on the coordinate value. The disposition data storage unit 155 stores the disposition data generated by the disposition data generation unit 152.

The disposition data adjustment unit 153 adjusts, as described later, the disposition data generated by the disposition data generation unit 152 and stores disposition data after the adjustment on the disposition data storage unit 155. The disposition data output unit 154 outputs, to the display unit 160, data for displaying a claim tree formed based on the disposition data adjusted by the disposition data adjustment unit 153. The disposition data output unit 154 may output disposition data to an application or the like for executing screen output.

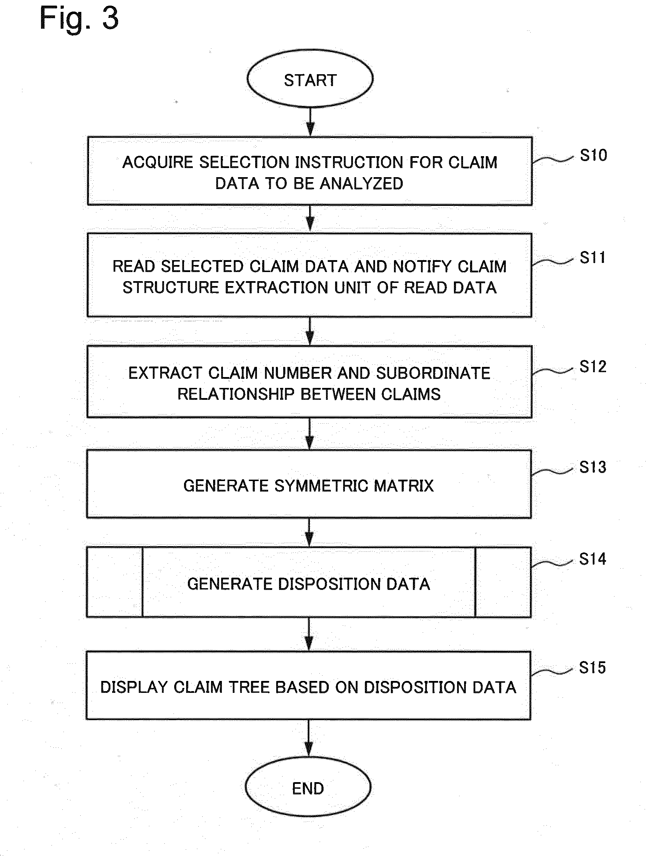

Fig. 3 is a flowchart illustrating processing of the information processing device 100. With reference to Fig. 3, details of an operation of the information processing device 100 will be described.

The input acceptance unit 110 notifies, upon receipt of a selection instruction for claim data to be analyzed by an input operation of a user, the control unit 120 of the instruction (S10). The control unit 120 reads the selected claim data from the claim data storage unit 130 and notifies the claim structure extraction unit 140 of the read claim data (S11).

The claim structure extraction unit 140 receives the claim data in the subordinate relationship extraction unit 141. The subordinate relationship extraction unit 141 extracts claim numbers and a subordinate relationship between claims from the received claim data (S12). The subordinate relationship extraction unit 141 extracts, for example, claims 1, 2, and 3 as claim numbers from claim data No. 1 illustrated in Fig. 2 and extracts a fact that the claim 1 is an independent claim and the claims 2 and 3 each are a dependent claim dependent on the claim 1. The subordinate relationship extraction unit 141 extracts these claim numbers and a subordinate relationship between claims, for example, by executing an ordinary text analysis process.

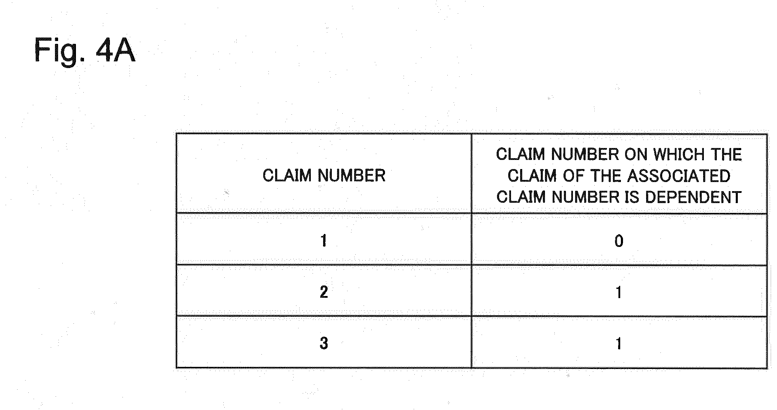

Fig. 4A is a diagram illustrating a subordinate relationship between claims extracted, based on the claim data No. 1 illustrated in Fig. 2. The subordinate relationship extraction unit 141 may generate, as subordinate relationship information, a table for associating a claim number with a claim number (a claim to be depended on) on which the claim of the associated claim number is dependent as illustrated in Fig. 4A. In Fig. 4A, "0" is indicated as a claim number on which a claim 1 is dependent, and "0" indicates that there is no claim that is dependent (another claim is not cited), i.e. indicates an independent claim. Further, it is indicated that claims 2 and 3 each are dependent on the claim 1.

The subordinate relationship extraction unit 141 extracts, when there are a plurality of pieces of claim data received from the control unit 120, a subordinate relationship for each piece of claim data and stores subordinate relationship information (referred to also as an inter-claim subordinate relationship) indicating each subordinate relationship on the subordinate relationship storage unit 143.

Next, the subordinate relationship extraction unit 141 transfers claim numbers and an inter-claim subordinate relationship extracted as described above to the symmetric matrix generation unit 142. The symmetric matrix generation unit 142 generates a symmetric matrix from the acquired claim numbers and inter-claim subordinate relationship (S13).

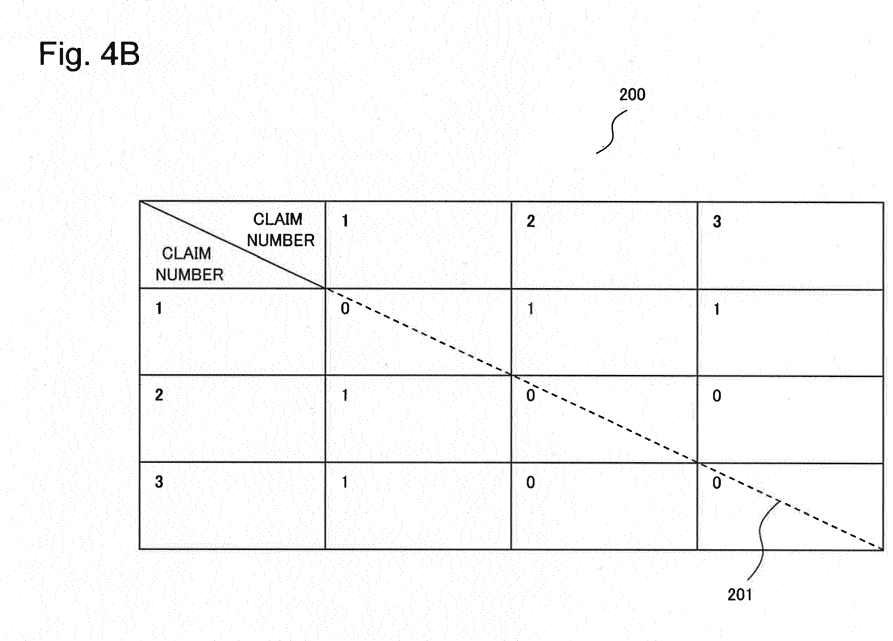

Fig. 4B illustrates a symmetric matrix 200 generated based on the inter-claim subordinate relationship illustrated in Fig. 4A. As illustrated in Fig. 4B, the symmetric matrix 200 is an $N \times N$ matrix (it is assumed that the number of claims=N) in which claim numbers included in claim data to be analyzed are sequentially disposed in respective rows and columns. Assuming that a claim number is regarded as a vertex in a graph theory, claims having a subordinate relationship can be handled as a graph in which a side from a certain vertex to a certain vertex exists, and a relationship between claims can be expressed as a symmetric matrix in which a component (i,j) of a claim i and a claim j (i and j each are a claim number) having a subordinate relationship is "1" (a component for no subordinate relationship is "0").

As illustrated in Fig. 4A, the claims 2 and 3 each are dependent on the claim 1, and therefore a component (1,2) and a component (1,3) of the symmetric matrix 200 illustrated in Fig. 4B each are "1", and a component (2,3) for the claims 2 and 3 having no subordinate relationship is "0". All diagonal components 201 (cells on a dashed line) are "0".

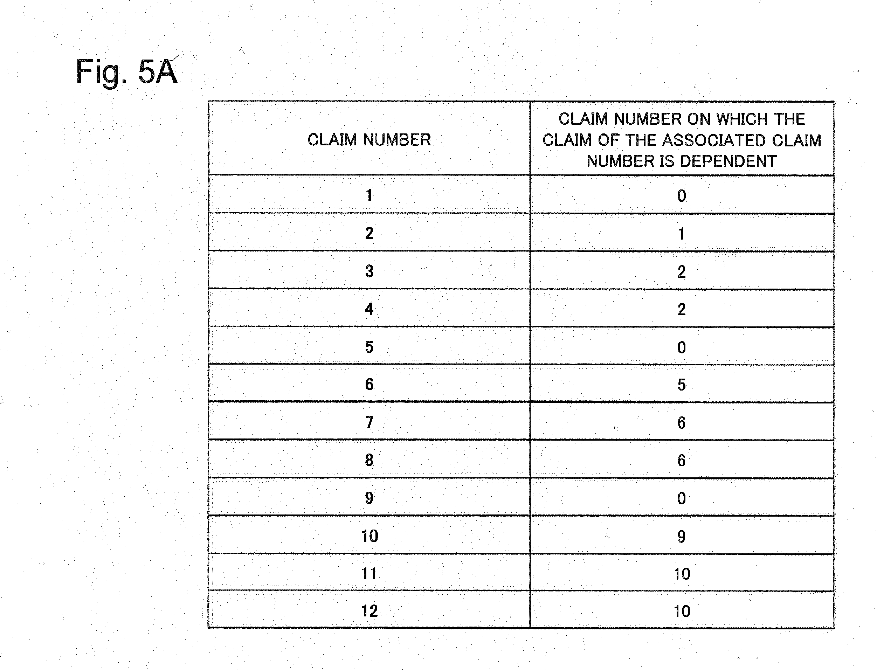

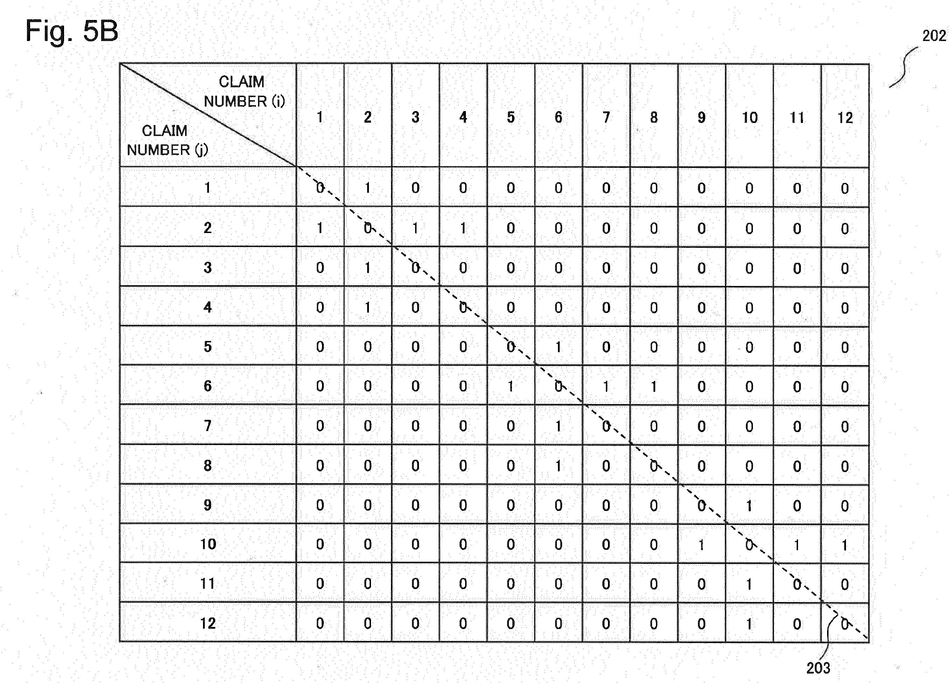

Fig. 5A is a diagram illustrating another example of claim numbers and a subordinate relationship between claims extracted by the subordinate relationship extraction unit 141. Further, Fig. 5B illustrates a symmetric matrix 202 generated by the symmetric matrix generation unit 142, based on the inter-claim subordinate relationship illustrated in Fig. 5A. In the examples illustrated in Fig. 4A and Fig. 5A, a case in which claim data include only a single dependent claim, i.e. claim data including a dependent claim that cites only one claim are exemplarily illustrated. However, with regard to claim data including a multiple dependent claim (i.e. a dependent claim that cites a plurality of claims), in a similar manner, a subordinate relationship can be extracted. Further, from claim data including a multiple dependent claim that cites a multiple dependent claim, a subordinate relationship may be extracted.

The symmetric matrix generation unit 142 stores a symmetric matrix generated as described above on the symmetric matrix storage unit 144. The symmetric matrix generation unit 142 generates, when receiving information indicating a plurality of subordinate relationships from the subordinate relationship extraction unit 141, a symmetric matrix for each subordinate relationship and stores the generated symmetric matrix on the symmetric matrix storage unit 144. The symmetric matrix generation unit 142 notifies, when storing a symmetric matrix on the symmetric matrix storage unit 144, the control unit 120 of the fact.

After storing a symmetric matrix on the symmetric matrix storage unit 144, the control unit 120 instructs the claim tree generation unit 150 to generate disposition data for drawing a claim tree.

The claim tree generation unit 150 generates disposition data of a claim tree in accordance with the instruction (S14).

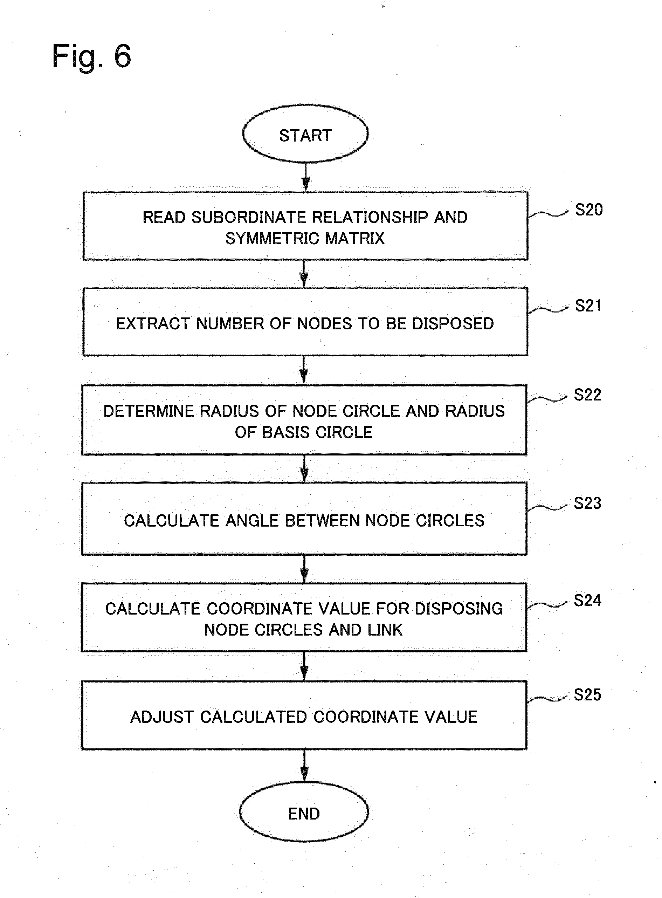

Fig. 6 is a flowchart illustrating processing of generating disposition data by the claim tree generation unit 150. In the present example embodiment, the claim tree generation unit 150 generates a claim tree for displaying, on the display unit 160, a graphic in which an area (claim area) where a claim number is disposed is surrounded by a circle. In the following description, a claim number is referred to also as a "node". Further, in the following description, a circle that surrounds an area where a claim number is disposed is referred to also as a "node circle". A graphic in which an area where a claim number is disposed is surrounded by points or a line is referred to also as a "claim graphic".

Further, in the present example embodiment, the claim tree generation unit 150 disposes a claim graphic including a node corresponding to an independent claim number along a circle (a basic circle to be described later). Further, the claim tree generation unit 150 connects, using a line, node circles forming claim graphics corresponding to claim numbers having a subordinate relationship and thereby generates a claim tree indicating the subordinate relationship between claims. The claim tree generation unit 150 generates a claim tree, specifically, by the following steps.

First, the disposition control unit 151 of the claim tree generation unit 150 reads, from the symmetric matrix storage unit 144, a symmetric matrix of claim data for generating disposition data in accordance with a generation instruction for disposition data for drawing a claim tree (S20).

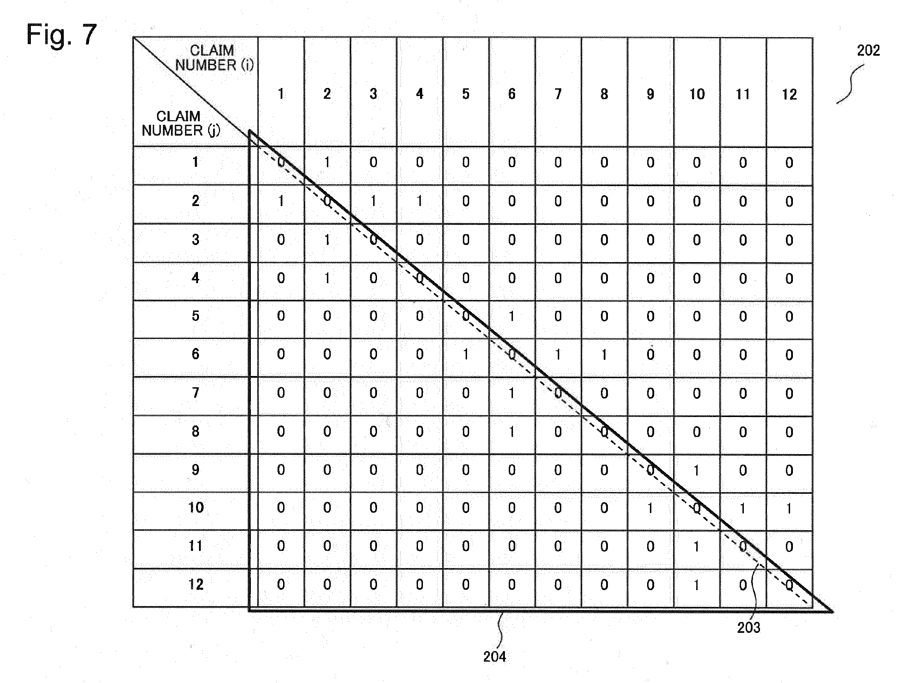

The disposition control unit 151 notifies the disposition data generation unit 152 of the read symmetric matrix and instructs the disposition data generation unit 152 to generate disposition data. The disposition data generation unit 152 first extracts the number of nodes that is the number of node circles to be disposed, based on the received symmetric matrix (S21). The number of nodes is equal to the number of claims. Description will be made with reference to Fig. 7. Fig. 7 illustrates a symmetric matrix 202 that is the same as the symmetric matrix 202 illustrated in Fig. 5B. By referring to components of one side across diagonal components 203 (cells on a dashed line) in the symmetric matrix 202, i.e. a range 204 of a triangle indicated by a solid line in Fig. 7, the number of nodes to be disposed, i.e. the number of claims, is extracted. As the number of nodes, "12" is extracted. In this range, a column number in which any one of row components is "1" is a number of a dependent claim. Further, in this range, a column number in which all values of column components are "0" is a number of an independent claim.

In the example illustrated in Fig. 7, the disposition data generation unit 152 can extract "12" as the number of nodes, "9" as the number of dependent claims, and "3" of claims 1, 5, and 9 as the number of independent claims.

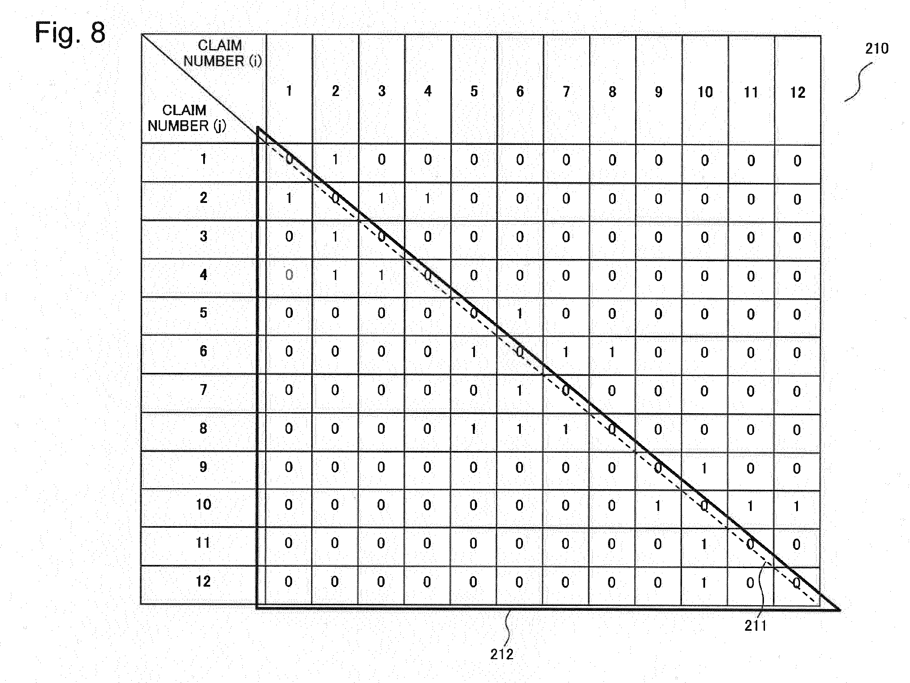

On the other hand, Fig. 8 illustrates an example of a symmetric matrix 210 regarding claim data including a multiple dependent claim. In the example illustrated in Fig. 8, a claim 4 is dependent on claims 2 and 3, and a claim 8 is dependent on each of claims 5, 6, and 7.

Next, the disposition data generation unit 152 determines a radius of a node circle and a radius of a circle where the node circle is disposed (hereinafter, referred to as a "basic circle") (S22). In other words, when the number of nodes extracted as describe above is designated as "N", a radius of a node circle is designated as "r", and a radius of a basic circle is designated as "R", the disposition data generation unit 152 determines a radius of each of a basic circle and a node circle in such a way that a size of the basic circle and a size of the node circle satisfy, for example, a relation of

following equation (1).

$$((2r \times N)/(2\pi R)) < 1 \; ... \; \text{Equation (1)}$$

Preferably, the disposition data generation unit 152 may determine a radius of each of a basic circle and a node circle in such a way that a size of the basic circle and a size of the node circle satisfy a relation of following equation (2) or equation (3).

$$((2r \times N)/(2\pi R)) < 0.8 \; ... \; \text{Equation (2)}$$

$$((2r \times N)/(2\pi R)) < 0.5 \; ... \; \text{Equation (3)}$$

When a basic circle and a node circle are displayed with sizes calculated in such a way as to satisfy, for example, the relation indicated in equation (3), visibility can be improved.

Further, the disposition data generation unit 152 may set an upper limit for a radius r of a node circle when the number of nodes is small (e.g. the number of nodes is equal to or less than 10) and may set a value satisfying, for example, equation (4) as an upper limit.

$$r = 2R/10 \; ... \; \text{Equation (4)}$$

Next, the disposition data generation unit 152 calculates an angle $\theta$ between node circles (S23). The angle between node circles refers to an angle $\theta$ formed by lines connecting a central point of a basic circle and central points of node circles, respectively. An angle $\theta$ between node circles can be calculated by equation (5).

$$\theta = 2\pi/N \; ... \; \text{Equation (5)}$$

Next, the disposition data generation unit 152 calculates, based on a radius of a node circle, a radius of a basic circle, and an angle between node circles calculated as described above, a coordinate value for disposing node circles and a link (S24). A line (connecting line) for connecting node circles is referred to also as a "link". Node circles connected by a link are node circles indicating claims in which in a symmetric matrix read from the symmetric matrix storage unit 144, "1" is set, i.e. claims having a subordinate relationship.

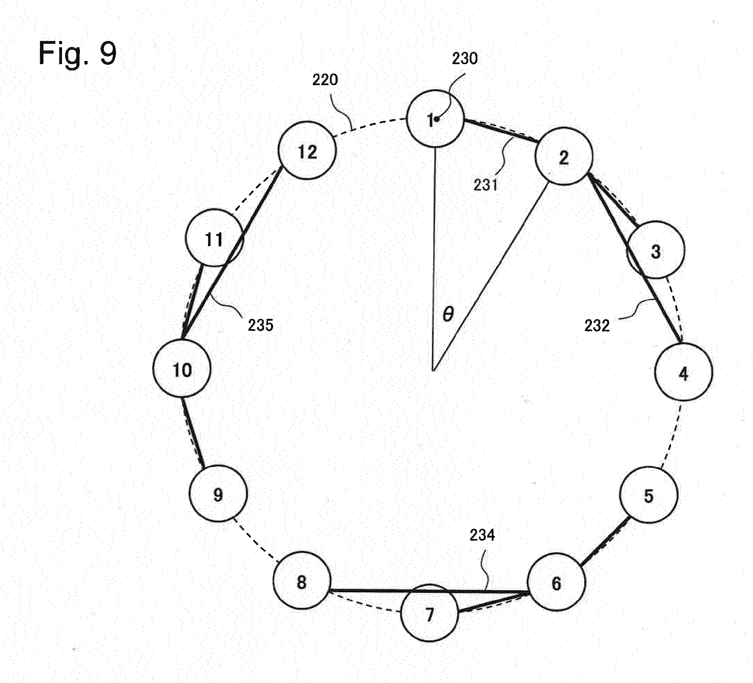

Fig. 9 is a diagram illustrating an example in which a node circle disposed based on a radius of the node circle, a radius of a basic circle, and an angle between node circles calculated as described above and a link between node circles corresponding to claims having a subordinate relationship are drawn. The disposition data generation unit 152 disposes, as illustrated in Fig. 9, a node circle of a number 1 (hereinafter, referred to also as a "node circle 1") corresponding to a claim 1 at a location 230 of 12 o'clock of a basic circle 220 and calculates a coordinate value in the display unit 160 for each node circle in such a way that node circles of a number 2 and the following are disposed along the basic circle 220 (in such a way as to circle) in clockwise ascending order. The disposition data generation unit 152 calculates a coordinate value of a central point of each node circle in such a way that the location 230 of 12 o'clock of the basic circle 220 and a central point of the node circle of the number 1 are matched with each other and a central point of each of node circles of the number 2 and the following is located on or in a periphery of the basic circle 220. Fig. 9 exemplarily illustrates a claim tree drawn based on the symmetric matrix 202 illustrated in Fig. 7. Here, node circles are disposed in such a way that numbers thereof are located in clockwise ascending order. However, the present example embodiment is not limited thereto, and the node circles may alternatively be disposed in counter-clockwise ascending order. Further, a node circle may be evenly disposed on or in a periphery of the basic circle 220 or may not be evenly disposed.

The disposition data generation unit 152 further calculates coordinate values of a start point and an end point of each link in order to dispose, as illustrated in Fig. 9 (e.g. a link 231), a link between node circles in which a subordinate relationship is indicated in the symmetric matrix 202 read from the symmetric matrix storage unit 144. A start point and an end point of a link may be, for example, an intersection of a circumference of a node circle and the basic circle 220.

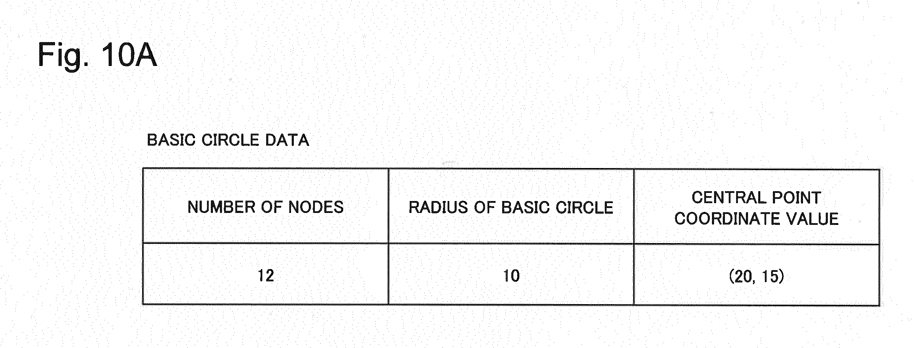

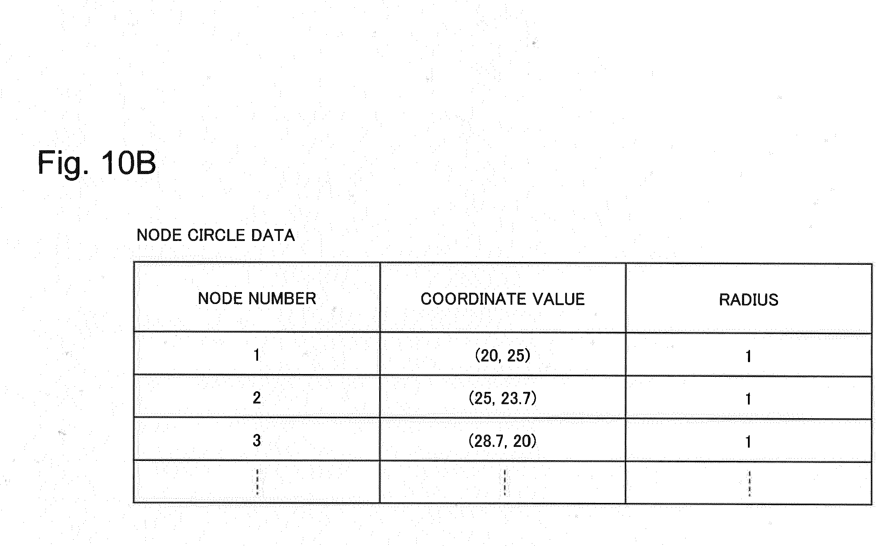

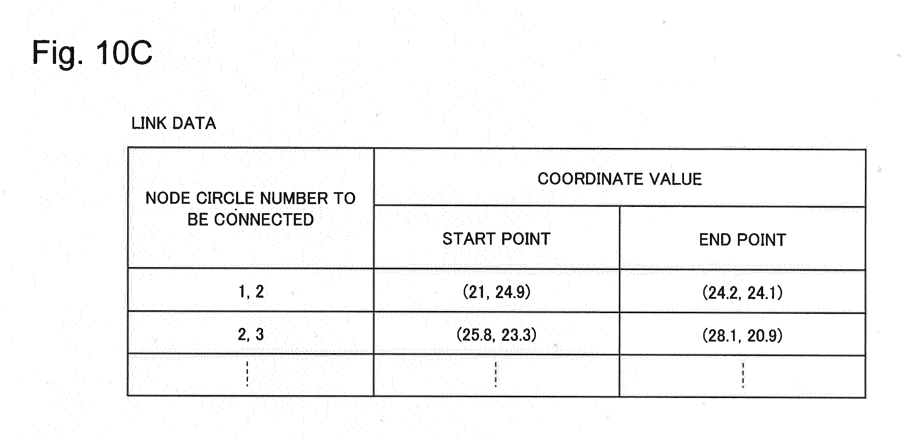

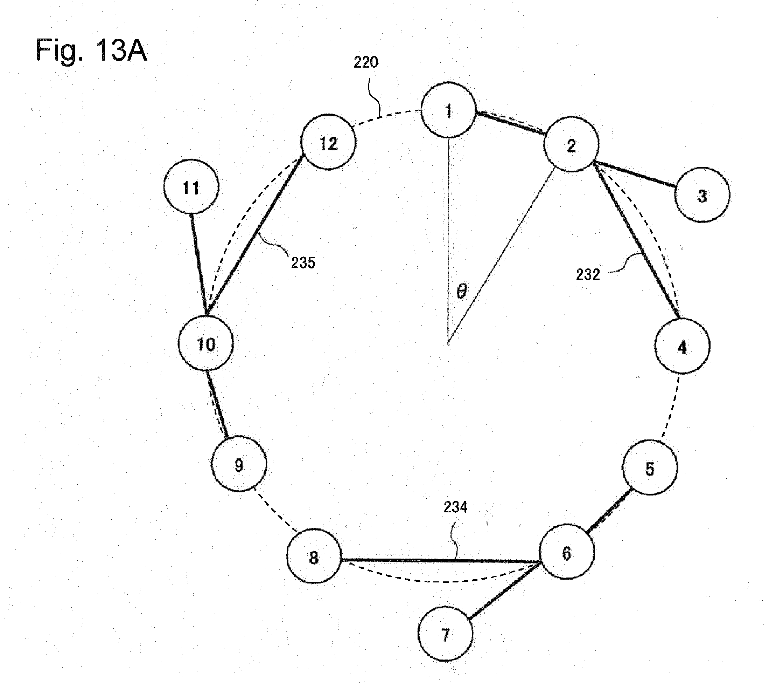

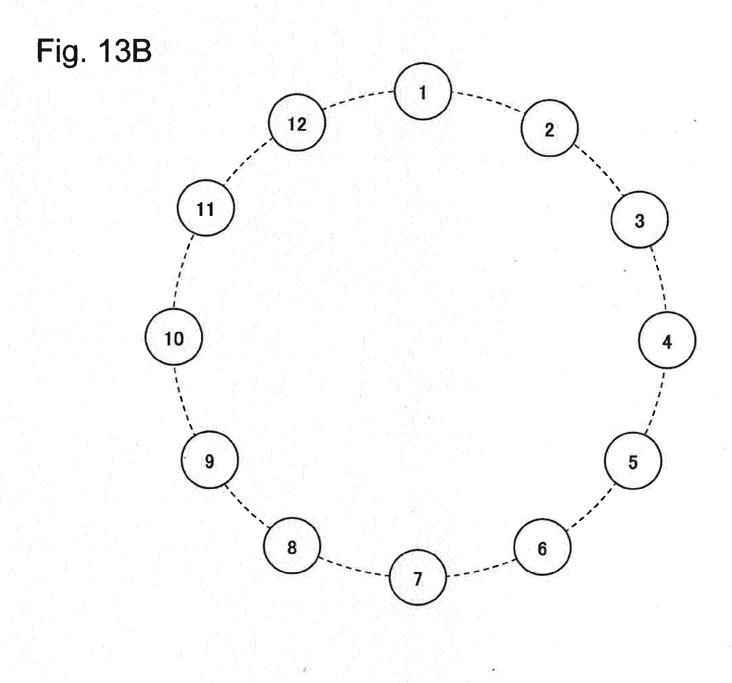

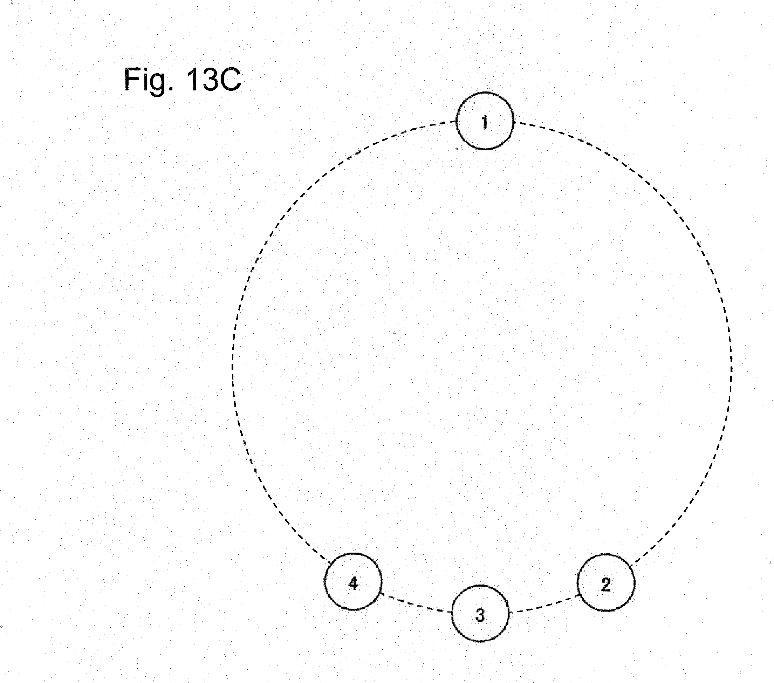

Figs. 10A to 10C each are a diagram illustrating one example of disposition data regarding a node circle and a link generated by the disposition data generation unit 152. Fig. 10A illustrates basic circle data generated by the disposition data generation unit 152. The basic circle data include the number of nodes, a radius of a basic circle, and a central point coordinate value. Fig. 10B illustrates node circle data generated by the disposition data generation unit 152. The node circle data include a number of a node circle (hereinafter, referred to also as a "node number"), a coordinate value of a central point of a node circle assigned with the number, and a radius of the node circle. Fig. 10C illustrates link data generated by the disposition data generation unit 152. The link data include node circle numbers to be connected and respective coordinate values of a start point and an end point. A coordinate value in Figs. 10A to 10C and following corresponding drawings is a value indicating one example and is not necessarily a value corresponding to a coordinate value disposed in a claim tree illustrated in Fig. 9, 13, and the like.

The disposition data generation unit 152 stores disposition data generated as described above on the disposition data storage unit 155.

After the disposition data generation unit 152 generating disposition data as described above, the disposition control unit 151 instructs the disposition data adjustment unit 153 to adjust the disposition data. The disposition data adjustment unit 153 adjusts a coordinate value included in the disposition data in accordance with the instruction (S25). In other words, the disposition data adjustment unit 153 modifies a coordinate value in order to shift a node circle location in such a way as to eliminate overlapping at a location where node circles are overlapped or at a location where a node circle and a link are overlapped. In Fig. 9, a node circle 3 and a link 232 between a node circle 2 and a node circle 4 are overlapped with each other. Therefore, a coordinate value is modified as described above in order to further clarify whether the node circle 3 is connected to the node circle 4, i.e. presence or absence of a subordinate relationship between a claim 3 and a claim 4. For determination that overlapping exists, it may be determined that, for example, node circles having an intersection are overlapped with each other. Further, it may be determined that a link having an intersection with any one of node circles having no subordinate relationship and the node circle are overlapped with each other. Further, for modification of a coordinated value, it is preferable that a shift is made in such a way as to completely eliminate overlapping, but without limitation thereto, it needs to be understood at least that the node circle and the link are not connected to each other.

In Fig. 9, node circles 3, 7, and 11 are displayed by being overlapped with links 232, 234, and 235, respectively. The disposition data adjustment unit 153 adjusts (modifies) disposition data stored on the disposition data storage unit 155 in such a way as to move the node circle 3 to the outside of the basic circle 220, i.e. in a direction where a distance from a central point of the basic circle 220 increases, in order to eliminate overlapping between the node circle 3 and the link 232. Similarly, the disposition data adjustment unit 153 modifies disposition data in such a way as to move the node circle 7 to the outside of the basic circle 220 in order to eliminate overlapping between the node circle 7 and the link 234. The disposition data adjustment unit 153 modifies disposition data in such a way as to move the node circle 11 to the outside of the basic circle 220 in order to eliminate overlapping between the node circle 11 and the link 235.

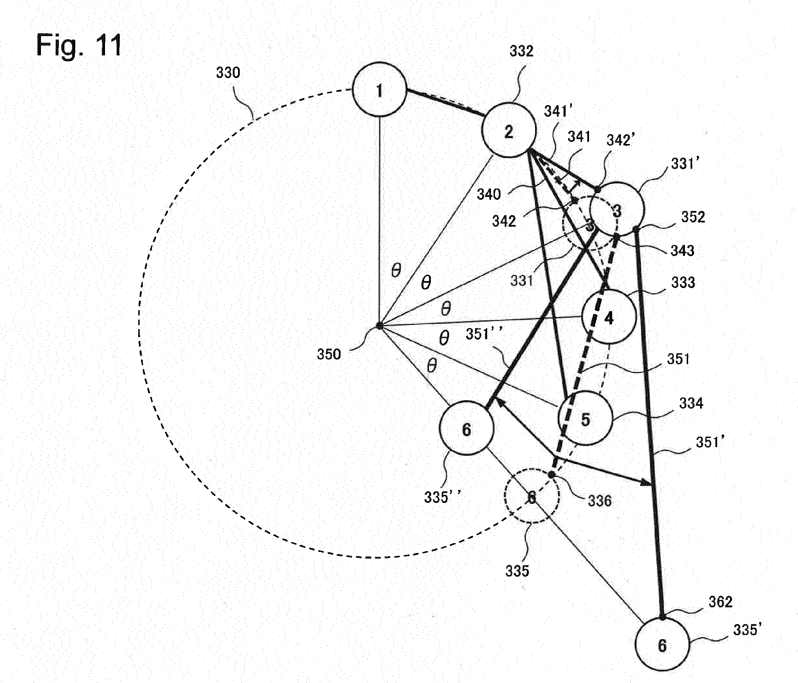

Fig. 11 is a diagram illustrating in detail movement of a node circle as described above. Fig. 11 illustrates a claim tree regarding a part of claim data of a structure (subordinate relationship) different from Fig. 9. In the claim data illustrated in Fig. 11, a claim 2 is dependent on an independent claim 1, claims 3, 4, and 5 are dependent on the claim 2, and a claim 6 is dependent on the claim 3. Along a basic circle 330, a node circle corresponding to each claim is disposed in claim number order in a clockwise manner.

As illustrated in Fig. 11, a node circle 3 (indicated by a reference sign 331 in Fig. 11, hereinafter, being indicated only by a reference sign indicated in Fig. 11) and a link 340 between a node circle 2 (332) and a node circle 4 (333) are overlapped with each other, and therefore the disposition data adjustment unit 153 modifies disposition data in such a way as to move the node circle 3 (331) to the outside, i.e. a central point of the node circle 3 (331) in a direction where a distance from a central point 350 of a basic circle 330 increases. At that time, the disposition data adjustment unit 153 moves the node circle 3 (331) while, for example, an angle between node circles, i.e. an angle $\theta$ between the node circle 2 (332) and the node circle 3 (331) is maintained. Thereby, the node circle 3 (331) is moved, as illustrated as a node circle 3 (331'). Here, a node circle is moved while an angle $\theta$ between node circles is maintained. However, the present example embodiment is not limited thereto, and the angle between node circles may be changed in a range where a node number is disposed in clockwise ascending order.

Further, the disposition data adjustment unit 153 modifies also a coordinate value of an end point 342 of the link 341 between the node circle 2 (332) and the node circle 3 (331) in the same direction as the movement of the node circle 3 (331), as illustrated as an end point 342'. Thereby, the link 341 is also moved, as illustrated as a link 341'. The movement of the end point 342 is not limited to the same direction as the movement of the node circle 3 (331). Further, at that time, the disposition data adjustment unit 153 changes also a coordinate value of a start point of a link on a circumference of the node circle 3 (331') in such a way that connection between the node circle 3 (331') and a node circle 6 (335) is not cut.

When the node circle 3 (331') is moved as described above, a link 351 between the node circle 3 (331') and the node circle 6 (335) is overlapped with the node circle 4 (333) and a node circle 5 (334). Therefore, the disposition data adjustment unit 153 moves the node circle 6 (335) to the outside (as illustrated as a node circle 6 (335')) in order to eliminate overlapping between the link 351 and the node circle 4 (333) and the node circle 5 (334). At that time, the disposition data adjustment unit 153 moves the node circle 6 (335) while an angle between nodes, i.e. an angle $\theta$ between

the node circle 5 (334) and the node circle 6 (335) is maintained. However, the present example embodiment is not limited thereto.

The disposition data adjustment unit 153 may modify a start point 343 of the link 351 with the node circle 6 (335) on a circumference of the node circle 3 (331') after the movement, as illustrated as a start point 352. Further, the disposition data adjustment unit 153 may move an end point 336 of the link 351 together with the movement of the node circle 6, as illustrated as an end point 362. In other words, a start point or an end point of a link on a circumference of a node in association with movement of a node circle thereof can be freely moved in a range where a moved link is not overlapped with another node circle and a node number order is not changed.

On the other hand, the disposition data adjustment unit 153 may modify disposition data in such a way as to move the node circle 6 (335) to the inside, i.e. a central point of the node circle 6 (335) in a direction where a distance from the central point 350 of the basic circle 330 decreases, in such a way that the link 351 is not overlapped with the node circles 4 and 5. The disposition data adjustment unit 153 moves also the link 351, as illustrated as a link 351'', in such a way as to connect a node circle 6 (335'') after movement and the node circle 3 (331'). At that time, a start point of the link 351'' may be the same as the start point 343 before movement or may be changed. During movement of a node circle, a node circle is preferably moved in a direction where a length of a link decreases, but is not limited thereto. For modification of disposition data as described above, calculation may be repeatedly made in such a way as to move a node circle or a link in which overlapping between node circles or overlapping between a node circle and a link exists until the overlapping is eliminated, for example, in order of a claim number.

As illustrated as the end point 342', the start point 352, and the like of Fig. 11, for a link between node circles having a subordinate relationship, a start point and an end point thereof may be displayed by a black circle or the like in order to clearly indicate that there is a subordinate relationship. In this case, for a link between node circles having no subordinate relationship, a black circle or the like is not displayed, and therefore these node circles can be discriminated from node circles having a subordinate relationship. In Fig. 11, for example, the node circle 4 and the node circle 6 do not have a subordinate relationship. In this case, the link 351' after movement may be disposed in such a way as to be in contact with the node circle 4 (i.e. even when the link 351' and the node circle 4 are disposed in such a way as to be in contact with each other, it is clear that there is no subordinate relationship when a connection point thereof is not displayed by a black circle or the like).

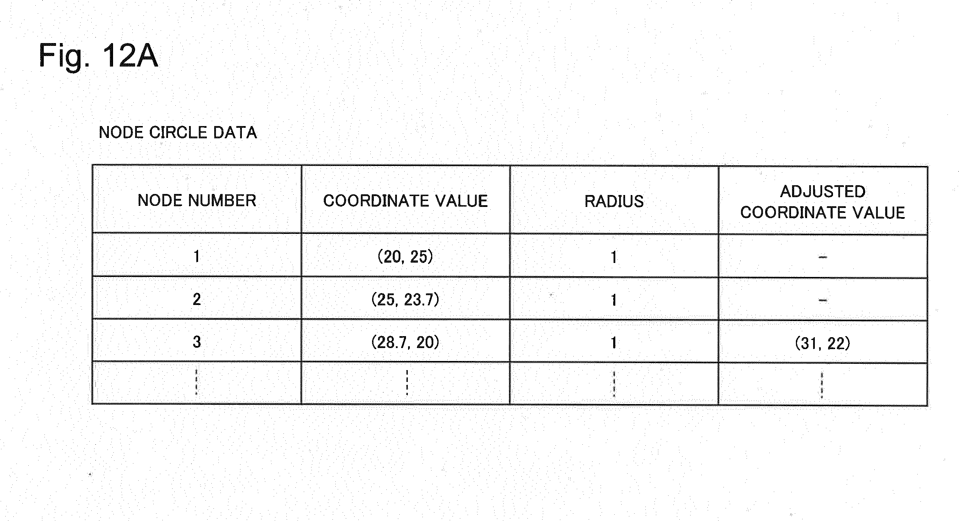

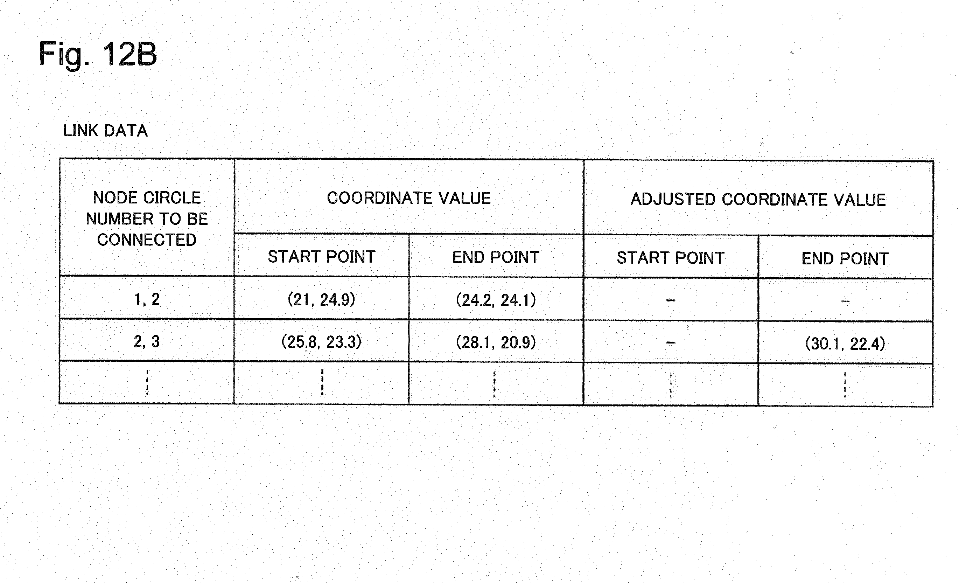

As described above, the disposition data adjustment unit 153 modifies disposition data generated by the disposition data generation unit 152 and stores the modified disposition data on the disposition data storage unit 155. Figs. 12A and 12B each are a diagram illustrating one example of disposition data including a coordinate value adjusted by the disposition data adjustment unit 153. As illustrated in Fig. 12A, node circle data include a coordinate value (adjusted coordinate value) adjusted by the disposition data adjustment unit 153, in addition to the node circle data illustrated in Fig. 10A. It is indicated that coordinates of a central point of a node circle of a number 3 has been adjusted. Similarly, as illustrated in Fig. 12B, link data include coordinate values (adjusted coordinate values) of a start point and an end point adjusted by the disposition data adjustment unit 153, in addition to the link data illustrated in Fig. 10B.

Through the above steps, disposition data are generated. When disposition data are generated, the disposition control unit 151 instructs the disposition data output unit 154 to display a claim tree by using an adjusted coordinate value stored on the disposition data storage unit 155. The disposition data output unit 154 reads corresponding disposition data from the disposition data storage unit 155 in accordance with the instruction, outputs the read data to the display unit 160, and thereby displays a claim tree (S15 of Fig. 3).

Fig. 13A is a diagram illustrating one example of a claim tree displayed using a coordinate value adjusted by the disposition data adjustment unit 153. As illustrated in Fig. 13A, overlapping between the node circle 3 and the link 232, overlapping between the node circle 7 and the link 234, and overlapping between the node circle 11 and the link 235 each have been eliminated. Depending on an instruction from a user, a graphic (e.g., the basic circle 220) along which a node circle is located may be displayed or may not be displayed. Further, when all claims mutually have no subordinate relationship, i.e. all claims are independent claims, only node circles may be disposed, for example, along the basic circle 220, as illustrated in Fig. 13B. Further, it is conceivable that a subordinate relationship is indicated by disposition in the basic circle 220. For example, as illustrated in Fig. 13C, a distance between node circles assigned with claim numbers having a subordinate relationship may be disposed in such a way as to be shorter than a predetermined length.

Further, the information processing device 100 may generate, when a plurality of pieces of claim data are selected as analysis targets, pieces of disposition data for all pieces of claim data, respectively, store the generated disposition data on the disposition data storage unit 155, thereafter, read, in response to designation of any piece of claim data from a user, a corresponding piece of disposition data from the disposition data storage unit 155, and thereby display a claim tree.

As described above, according to the present first example embodiment, the information processing device 100 extracts a subordinate relationship for claims from claim data including one or a plurality of claims, disposes a node circle assigned with a number of each claim along a circle in ascending order, and generates, as a relationship diagram, a claim tree in which a link is formed between node circles having a subordinate relationship. The information processing device 100 displays the generated relationship diagram on the display unit 160. When this configuration is employed, according to the present first example embodiment, even when the number of claims included in one piece of claim data increases, by adjusting a radius of a circle where a node circle is disposed and a radius of a node circle assigned with a claim number and the like, a claim tree can be displayed without increasing a display area. Further, even when the number of claims included in one piece of claim data is relatively large or small, a claim tree can be displayed with substantially the same size. Therefore, a user can easily view the entire structure of claims, and therefore even when the number of claims is large, the present example embodiment has an advantageous effect that a claim structure can be easily confirmed. Further, as described above, a claim tree can be displayed without increasing a display area, and therefore display of only a part of a claim structure due to a display area insufficiency of a screen and the like is avoidable, whereby the present example embodiment has an advantageous effect that the entire structure of a claim tree can be correctly displayed in a predetermined display area.

In the present example embodiment and the following example embodiments, a claim tree may be displayed as follows. In other words, in the above description, it has been described that a node circle is disposed along a circle, but without limitation thereto, a node circle may be disposed along an ellipse or may be disposed along another graphic. Further, a graphic along which a node circle is disposed may be a graphic that is closed or may be a graphic that is not closed. A node circle may be disposed, for example, on or in a periphery of circularly-arranged points or a circling line. A node circle may be evenly disposed in a graphic along which the node circle is located or may not be evenly disposed. When the number of claims included in claim data is 1, a node circle assigned with a claim number thereof may be disposed in any location, i.e. on or in a periphery of, for example, a circle, an ellipse, or a polygon.

Further, in the above description, a claim graphic has been represented by a circle that surrounds an area where a claim number in a claim tree is disposed, but without limitation to a circle, may be an ellipse, a polygon, or the like, and at least the area needs to be surrounded by points or a line. Alternatively, a claim graphic is represented by a graphic such as a circle and the like but is not limited thereto, and at least an area where a claim number is disposed in a claim tree needs to be displayed. Further, a type of a line that connects claim graphics is not specifically limited and may be a solid line, a dashed line, a wavy line, or the like.

Second Example Embodiment

Next, a second example embodiment based on the above-described first example embodiment will be described. In the following description, a component similar to the component of the first example embodiment is assigned with the same reference sign, and thereby overlapping description will be omitted.

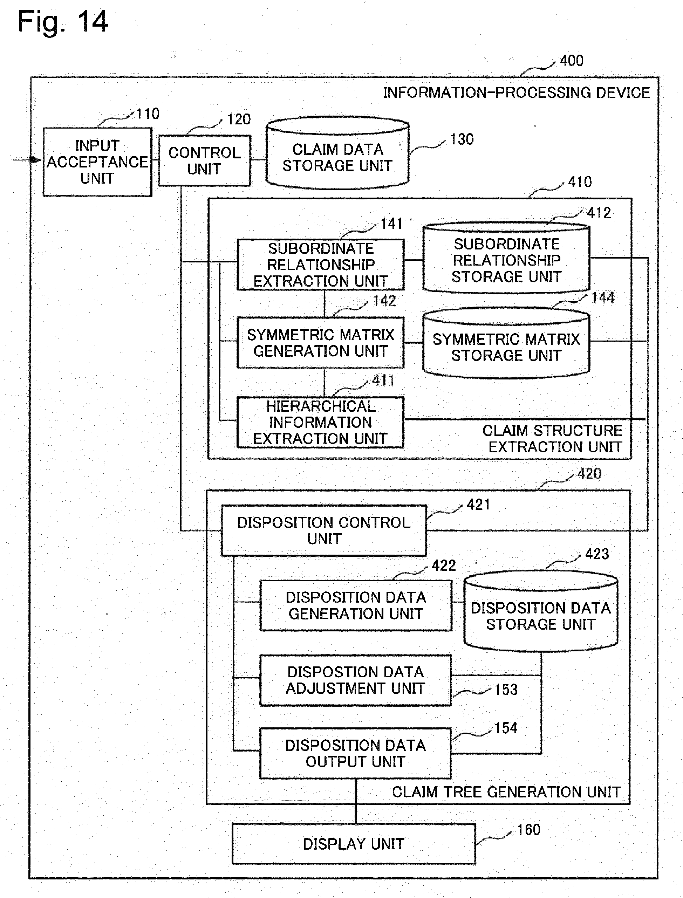

Fig. 14 is a block diagram illustrating a configuration of an information processing device 400 according to the second example embodiment of the present invention. As illustrated in Fig. 14, the information processing device 400 includes a claim structure extraction unit 410 and a claim tree generation unit 420, instead of the claim structure extraction unit 140 and the claim tree generation unit 150 included in the information processing device 100 described in the first example embodiment, respectively.

The claim structure extraction unit 410 includes a subordinate relationship storage unit 412 instead of the subordinate relationship storage unit 143 of the claim structure extraction unit 140 included in the information processing device 100 and further incudes a hierarchical information extraction unit 411.

The claim tree generation unit 420 includes a disposition control unit 421, a disposition data generation unit 422, and a disposition data storage unit 423, instead of the disposition control unit 151, the disposition data generation unit 152, and the disposition data storage unit 155 of the claim tree generation unit 150 included in the information processing device 100, respectively.

The information processing device 400 according to the present second example embodiment includes a function of displaying the depth of hierarchy in a subordinate relationship between claims in an identifiable manner, in addition to the function of the information processing device 100 described in the first example embodiment.

It is assumed that a symmetric matrix 202 described by referring to Fig. 7 in the first example embodiment is being stored on a symmetric matrix storage unit 144.

It is assumed that an input acceptance unit 110 has accepted a selection instruction for claim data to be analyzed and has accepted an instruction (hereafter, referred to as a "hierarchical display instruction") for displaying the depth of hierarchy in an identifiable manner. The input acceptance unit 110 notifies a control unit 120 of the accepted instruction. Similarly to the first example embodiment, the control unit 120 reads claim data from a claim data storage unit 130 and notifies the claim structure extraction unit 410 of the read claim data. Similarly to the first example embodiment, a subordinate relationship extraction unit 141 extracts a subordinate relationship, a symmetric matrix generation unit 142 generates a symmetric matrix, and the units store these on the subordinate relationship storage unit 412 and the symmetric matrix storage unit 144, respectively.

Upon storing the symmetric matrix 202 on the symmetric matrix storage unit 144, the symmetric matrix generation unit 142 instructs the hierarchical information extraction unit 411 to extract the depth of hierarchy (hierarchical information). The hierarchical information extraction unit 411 extracts, in accordance with the instruction, the depth of hierarchy of each claim from the symmetric matrix 202 stored on the symmetric matrix storage unit 144. The depth of hierarchy refers to the number of hierarchy levels that needs to go up to reach an independent claim from a designated dependent claim by tracing each claim to be depended on (a claim cited by a dependent claim) assuming the hierarchy level of the independent claim is "1".

Extraction of the depth of hierarchy of, for example, the claim 4 illustrated in Fig. 7 will be described. In the symmetric matrix 202, a component (2,4) is 1, and therefore the hierarchical information extraction unit 411 extracts that the claim 4 is dependent on a claim 2. This is counted as the depth of hierarchy "1". By examining a subordinate relationship for the claim 2 that is a claim to be depended on of the claim 4, it is found that a component (1,2) is "1", and therefore the hierarchical information extraction unit 411 extracts that the claim 2 is dependent on the claim 1. This is combined with the counted depth of hierarchy "1" and is counted as a depth of hierarchy "2". The claim 1 that is a claim to be depended on of the claim 2 is an independent claim. A hierarchy level of an independent claim is designated as "1", and therefore by combining this number and the counted depth of hierarchy "2", the depth of hierarchy "3" is counted. In this manner, the hierarchical information extraction unit 411 calculates the depth of hierarchy of the claim 4 as "3". The hierarchical information extraction unit 411 calculates, in this manner, the hierarchy level of a claim to be extracted.

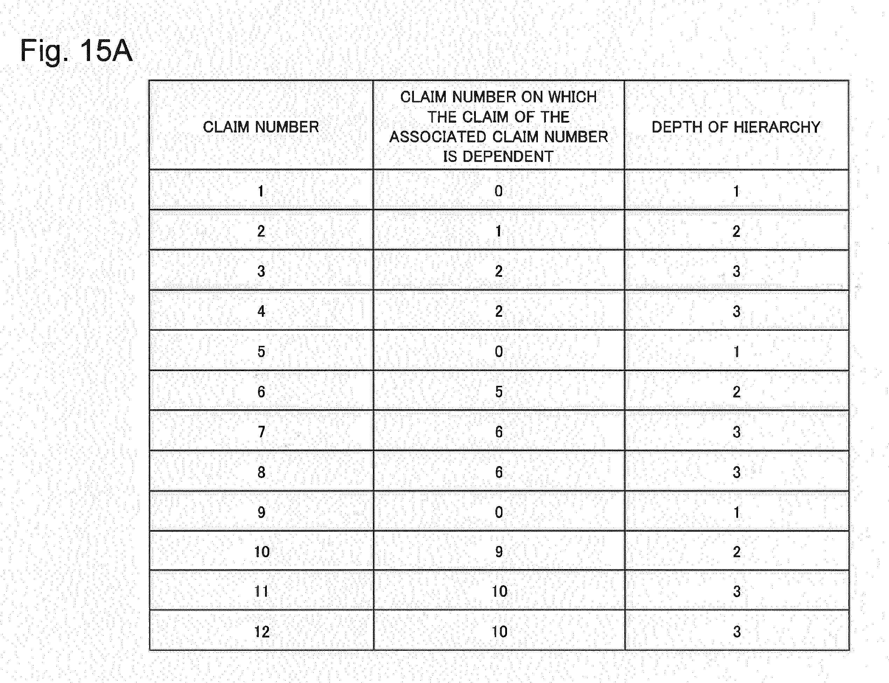

The hierarchical information extraction unit 411 extracts the depth of hierarchy in a similar manner for all claims and adds the results to subordinate relationship information stored in the subordinate relationship storage unit 412. Fig. 15A is a diagram illustrating one example of subordinate relationship information added with the depth of hierarchy extracted by the hierarchical information extraction unit 411. As illustrated in Fig. 15A, each claim number is associated with the depth of hierarchy.

The control unit 120 instructs the disposition control unit 421 to output a claim tree when hierarchical information is stored by the hierarchical information extraction unit 411. Similarly to the first example embodiment, the disposition control unit 421 reads, in accordance with the instruction, subordinate relationship information and a symmetric matrix from the subordinate relationship storage unit 412 and the symmetric matrix storage unit 144, respectively, and instructs the disposition data generation unit 422 to generate disposition data, based on the read information.

The disposition data generation unit 422 generates display form data for performing display by a display form different for each depth of hierarchy of a claim, in addition to disposition data described in the first example embodiment.

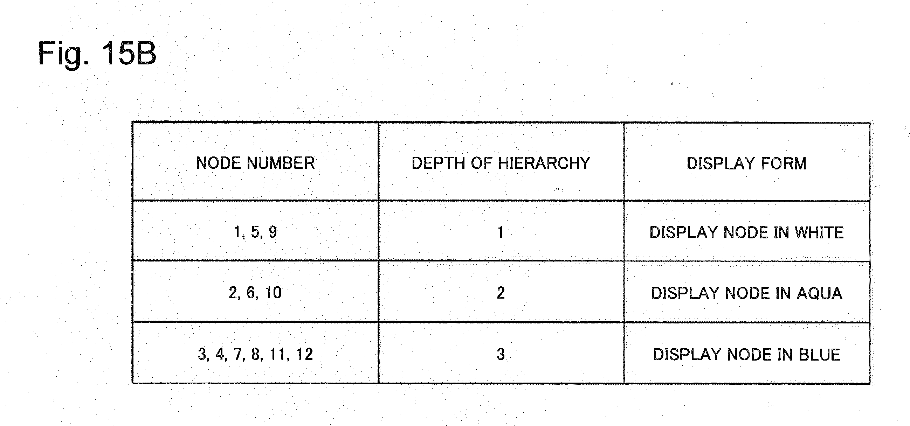

Fig. 15B is a diagram illustrating one example of display form data generated by the disposition data generation unit 422. As illustrated in Fig. 15B, display form data include, for example, a node number, a depth of hierarchy and a display form. As illustrated in Fig. 15B, the disposition data generation unit 422 may specify a node circle in such a way as to be displayed using a color different for each depth of hierarchy. The disposition data generation unit 422 may specify a display color of a node circle as a darker color as hierarchy level becomes deeper. In the present example embodiment, it has been described that the depth of hierarchy is displayed in an identifiable manner using a display color of a node circle, but without limitation thereto, the depth of hierarchy may be displayed in an identifiable manner, for example, by a pattern, a shape, and the like of a node circle.

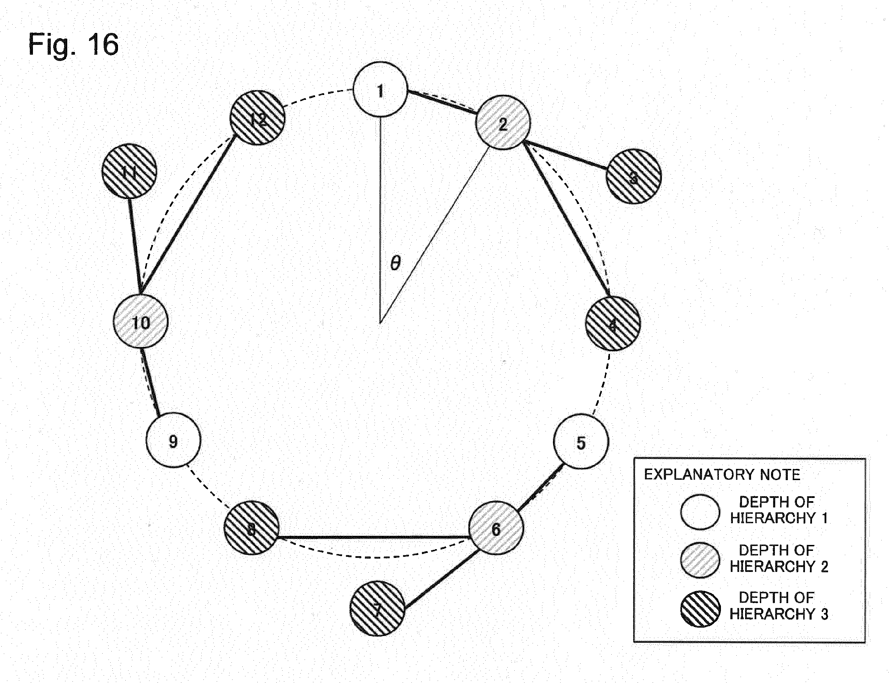

Fig. 16 is a diagram illustrating an example of a claim tree displayed on the display unit 160 by the information processing device 400, based on disposition data generated as in the first example embodiment by the disposition data generation unit 422 and display form data as illustrated in Fig. 15B. As illustrated in Fig. 15B, claims 1, 5, and 9 have the depth of hierarchy "1" (an independent claim), claims 2, 6, and 10 have the depth of hierarchy "2", and claims 3, 4, 7, 8, 11, and 12 have the depth of hierarchy "3". Therefore, in Fig. 16, a node circle is displayed by a display form different for each depth of hierarchy.

In the present second example embodiment, a timing of extracting hierarchical information by the claim structure extraction unit 410 and generating display form data by the claim tree display unit 420 is not limited to a timing at which a hierarchical display instruction is accepted from a user. In other words, the claim structure extraction unit 410 may extract, in response to reception of claim data from the control unit 120, hierarchical information in the hierarchical information extraction unit 411 and store the extracted information on the subordinate relationship storage unit 412, regardless of presence or absence of a hierarchical display instruction. The claim tree generation unit 420 may generate display form data for display different for each depth of hierarchy and store the generated data on the disposition data storage unit 423, when hierarchical information is being stored on the subordinate relationship storage unit 412.

In this case, upon accepting a hierarchical display instruction from a user when, for example, a claim tree in which all node circles have the same display form is being displayed on the display unit 160, the control unit 120 may instruct the disposition control unit 421 to perform display for each depth of hierarchy in accordance with the instruction, and read display form data from the disposition data storage unit 423 and output the read data to the display unit 160 by using the display data output unit 154. In this manner, the display form data are generated and stored in response to reception of claim data, and thereby presence or absence of display for each hierarchy level can be switched according to presence or absence of a hierarchical display instruction from a user.

As described above, according to the present second example embodiment, the claim structure extraction unit 410 extracts the depth of hierarchy of each claim, and the claim tree generation unit 420 displays a node circle by a form different for each depth of hierarchy of a claim in a claim tree. Thereby, the present example embodiment has an advantageous effect that a user can easily confirm the depth of hierarchy, and therefore a visibility of a claim structure can be improved.

Third Example Embodiment

Next, a third example embodiment based on the above-described first example embodiment will be described. In the following description, a component similar to the component of the first example embodiment is assigned with the same reference sign, and thereby overlapping description will be omitted.

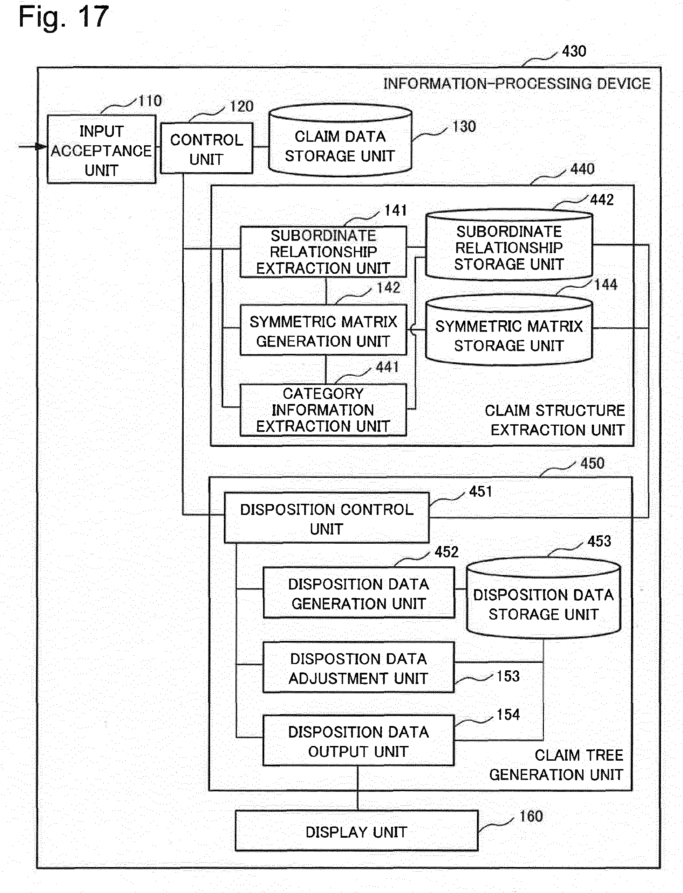

Fig. 17 is a block diagram illustrating a configuration of an information processing device 430 according to the present third example embodiment. As illustrated in Fig. 17, the information processing device 430 includes a claim structure extraction unit 440 and a claim tree generation unit 450, instead of the claim structure extraction unit 140 and the claim tree generation unit 150 included in the information processing device 100 described in the first example embodiment, respectively.

The claim structure extraction unit 440 includes a subordinate relationship storage unit 442 instead of the subordinate relationship storage unit 143 of the claim structure extraction unit 140 included in the information processing device 100 and further incudes a category information extraction unit 441.

The claim tree generation unit 450 includes a disposition control unit 451, a disposition data generation unit 452, and a disposition data storage unit 453, instead of the disposition control unit 151, the disposition data generation unit 152, and the disposition data storage unit 155 of the claim tree generation unit 150 included in the information processing device 100, respectively.

The information processing device 430 according to the present third example embodiment includes a function of performing display in a form different for each category of a claim, in addition to the function of the information processing device 100 described in the first example embodiment.

It is assumed that an input acceptance unit 110 has accepted a selection instruction for claim data to be analyzed and has accepted a display instruction for each category. The input acceptance unit 110 notifies a control unit 120 of the accepted instruction. Similarly to the first example embodiment, the control unit 120 reads claim data from a claim data storage unit 130 and notifies the claim structure extraction unit 440 of the read claim data. Similarly to the first example embodiment, a subordinate relationship extraction unit 141 extracts a subordinate relationship, a symmetric matrix generation unit 142 generates a symmetric matrix, and the units store these on the subordinate relationship storage unit 442 and the symmetric matrix storage unit 144, respectively.

After storing a symmetric matrix 202 on the symmetric matrix storage unit 144, the symmetric matrix generation unit 142 instructs the category information extraction unit 441 to extract category information. The category information extraction unit 441 extracts, in accordance with the instruction, category information of each claim from the claim data received from the control unit 120.

The category information refers to a classification of a subject being claimed by each claim included in claim data and includes, for example, a device, a method, a system, a program, a recording medium, and the like. The category information extraction unit 441 may extract category information of each claim from claim data by an ordinary text analysis process.

The category information extraction unit 441 extracts, when, for example, a claim ends with wording of "device" or starts with "A device" or "The device", "device" as category information of the claim. The category information extraction unit 441 further extracts, when, for example, a claim ends with wording of "method" or starts with "A method" or "The method", "method" as category information of the claim. The category information extraction unit 441 adds the extracted category information to subordinate relationship information stored on the subordinate relationship storage unit 442. The category information extraction unit 441 stores the category information on the subordinate relationship storage unit 442 and then notifies the control unit 120 of this fact.

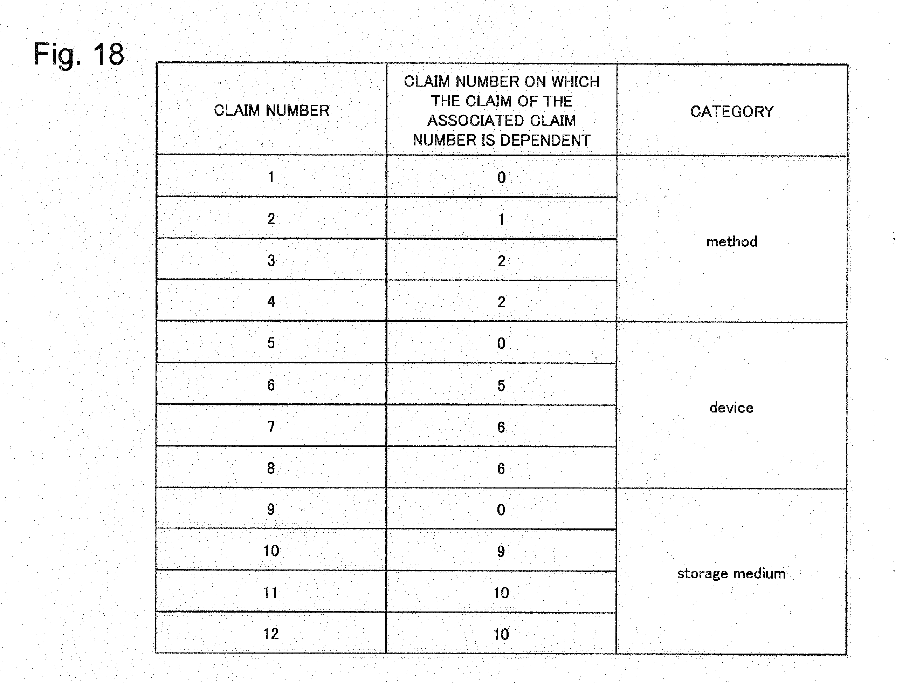

Fig. 18 is a diagram illustrating one example of subordinate relationship information including category information extracted by the category information extraction unit 441. As illustrated in Fig. 18, each claim number is associated with category information. In the example illustrated in Fig. 18, it is indicated that claims 1 to 4, claims 5 to 8, and claims 9 to 12 are classified into respective categories of "method", "device", and "storage medium".

The control unit 120 instructs the disposition control unit 451 to output a claim tree when category information is stored by the category information extraction unit 441. Similarly to the first example embodiment, the disposition control unit 451 reads, in accordance with the instruction, subordinate relationship information and a symmetric matrix from the subordinate relationship storage unit 442 and the symmetric matrix storage unit 144, respectively, and instructs the disposition data generation unit 452 to generate disposition data, based on the read information.

The disposition data generation unit 452 generates display form data for performing display in a display form different for each piece of category information of a claim, in addition to disposition data described in the first example embodiment.

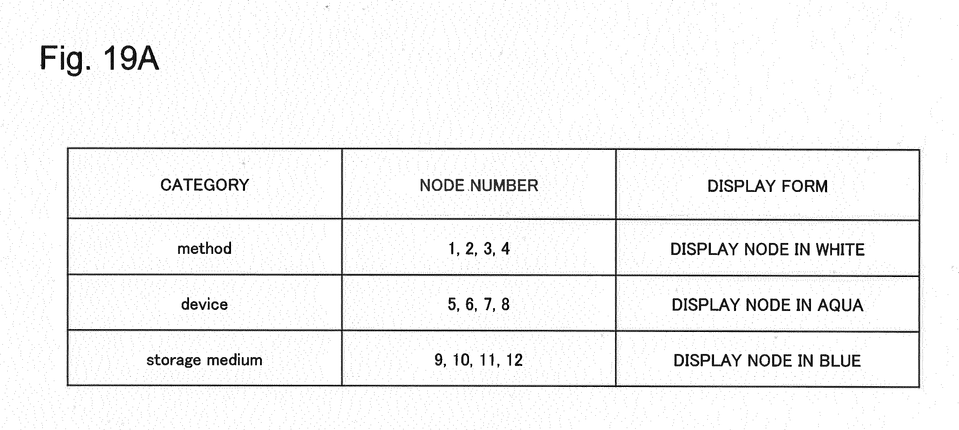

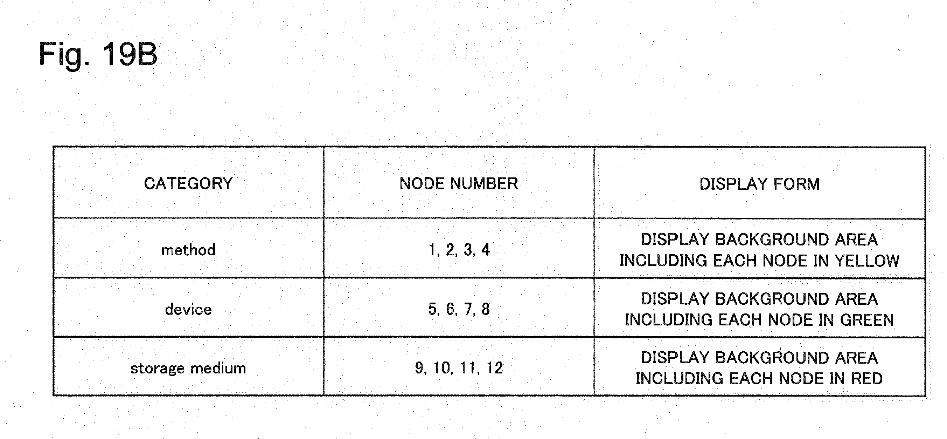

Figs. 19A and 19B each are a diagram illustrating one example of display form data for each piece of category information generated by the disposition data generation unit 452. As illustrated in Fig, 19A, display form data include, for example, a category, a node number, and a display form. As illustrated in Fig. 19A, the disposition data generation unit 452 may specify a display form in such a way that a node circle is displayed by a color different for each piece of category information. Further, without limitation to a different color, any display form capable of discriminating a difference may be employed.

Further, as illustrated in Fig. 19B, the disposition data generation unit 452 may specify a display form in such a way that a background area of a node circle included in a category thereof is displayed by a different color. In the present example embodiment, each category is displayed in an identifiable manner based on a display color has been described, but without limitation thereto, each category may be displayed in an identifiable manner based on, for example, a pattern, a shape, or the like of a node circle.

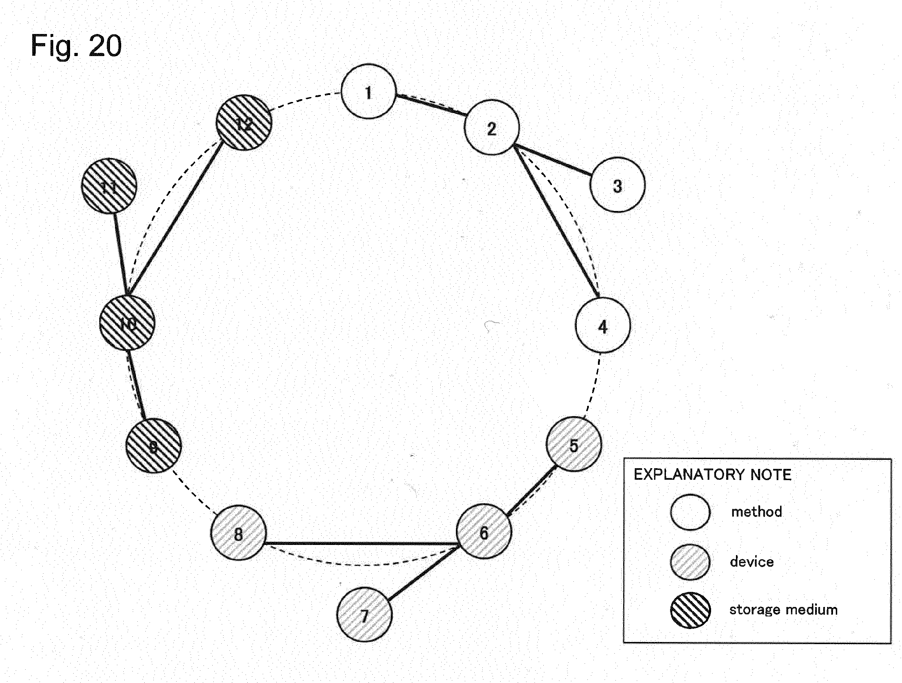

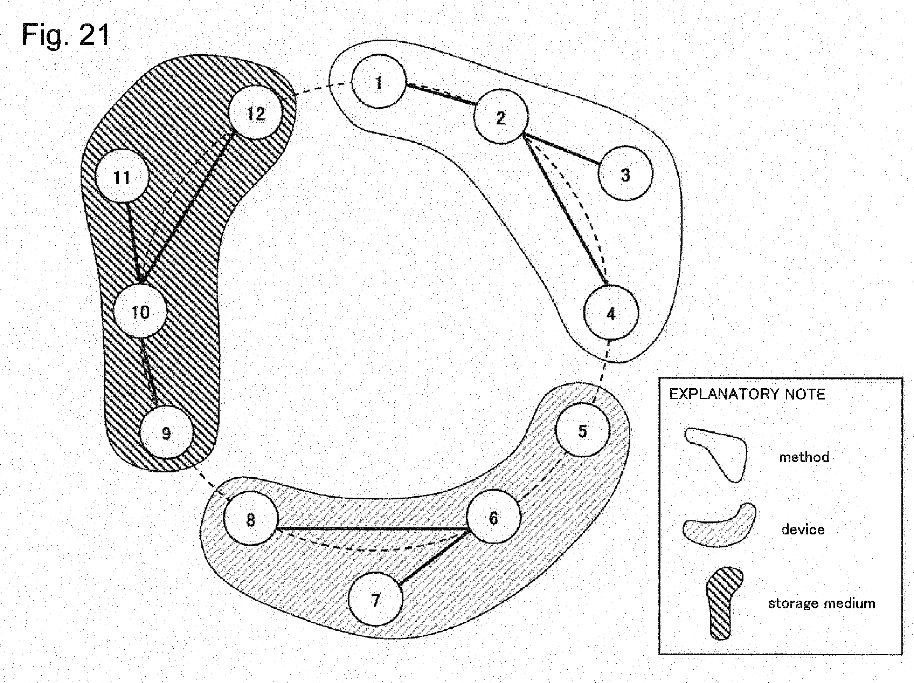

Fig. 20 is a diagram exemplarily illustrating a claim tree displayed based on the display form data illustrated in Fig. 19A. Further, Fig. 21 is a diagram exemplarily illustrating a claim tree displayed based on the display form data illustrated in Fig. 19B.

In this manner, a node circle assigned with a claim number thereof for each category in which the claim number is included is displayed by a different display form, and thereby visibility can be improved.

The disposition data generation unit 452 may generate disposition data in such a way that each node circle is disposed to form a graphic other than a circle and thereby display for each category is performed. Node circles of claim numbers included in the same category may be disposed for each side of a polygon, for example, in such a way that the polygon is formed from sides whose number is equal to a category number. Specific description is made below.

The disposition data generation unit 452 extracts a category number from category information read from the subordinate relationship storage unit 442. For example, in the case of claim data including the category information illustrated in Fig. 18, a category number is "3".

The disposition data generation unit 452 calculates coordinate values of node circles and links for disposing node circles of claims in the same category for each side of a polygon in such a way that the polygon is formed from sides whose number equal to the extracted category number.

When the number of nodes is designated as "N", the number of nodes included in a category having the maximum number of nodes is designated as "Nn", a radius of a node circle is designated as "r", and a length of each side of a polygon is designated as "m", the disposition data generation unit 452 determines a length of a side of a polygon and a radius of a node circle in such a way as to satisfy, for example, a relation of following equation (6).

$$2r \times Nn < m \ \ldots \ \text{Equation (6)}$$

Alternatively, the disposition data generation unit 452 may determine a length of a side of a polygon and a radius of a node circle in such a way as to satisfy a relation of following equation (7) or equation (8).

$$2r \times Nn < 0.8 \times m \ \ldots \ \text{Equation (7)}$$

$$2r \times Nn < 0.5 \times m \ \ldots \ \text{Equation (8)}$$

The disposition data generation unit 452 calculates a coordinate value of a central point of each node circle in such a way that the number of node circles included in each category are evenly disposed on each side, based on the radius of the node circle and the length of the side of the polygon calculated as described above.

The disposition data generation unit 452 further calculates coordinate values of a start point and an end point of a link in such a way as to set a link between node circles indicating claims having a subordinate relationship. The disposition data generation unit 452 stores disposition data including the calculated coordinate values on the disposition data storage unit 453.

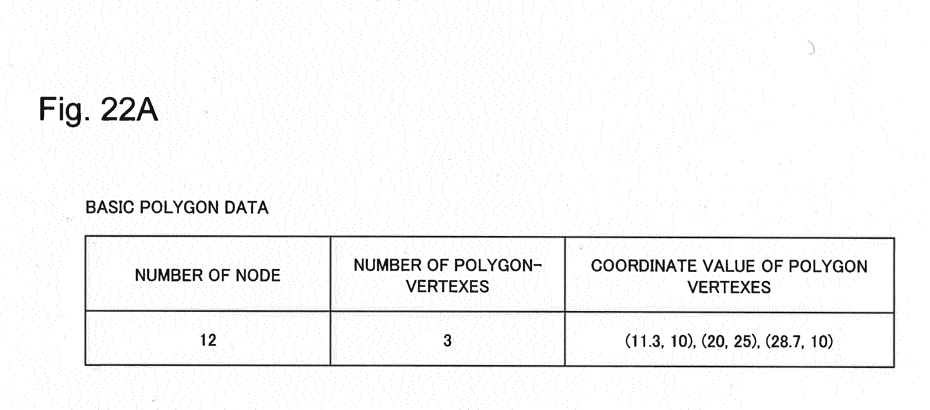

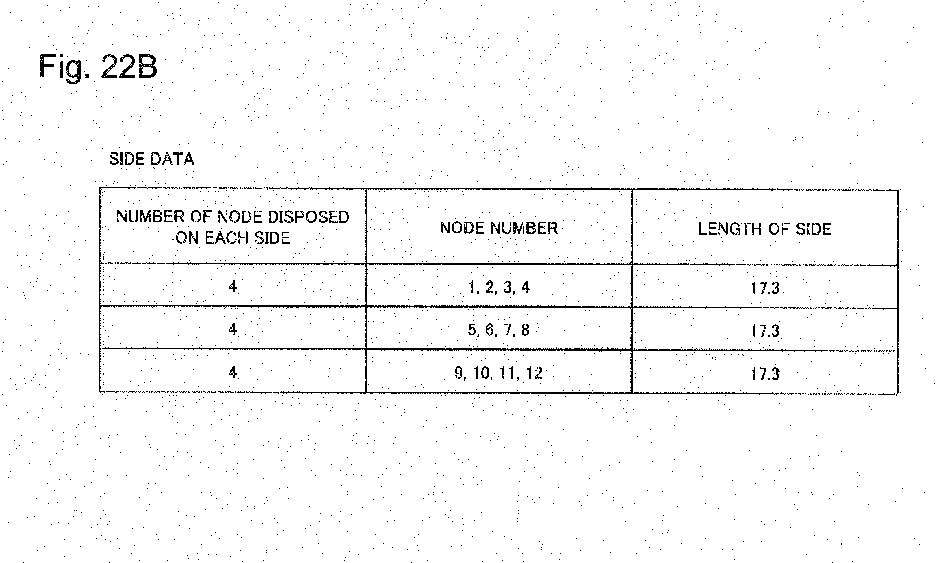

Figs. 22A to 22C each are a diagram illustrating one example of the disposition data generated by the disposition data generation unit 452. The disposition data generation unit 452 may generate basic polygon data as illustrated in Fig. 22A, instead of the basic circle data illustrated in Fig. 10A in the first example embodiment. The basic polygon data refer to data regarding a polygon where a node circle is disposed and include, for example, the number of nodes, the number of polygon-vertexes, and coordinate values of polygon vertexes. Further, the disposition data generation unit 452 may generate side data as illustrated in Fig. 22B. The side data include, for example, the number of nodes disposed on each side of a polygon, a node number, and a length of a side.

Similarly to the first example embodiment, a disposition data adjustment unit 153 adjusts a coordinate value for disposition data stored on the disposition data storage unit 453 in such a way as to eliminate overlapping between node circles or overlapping between a node circle and a link.

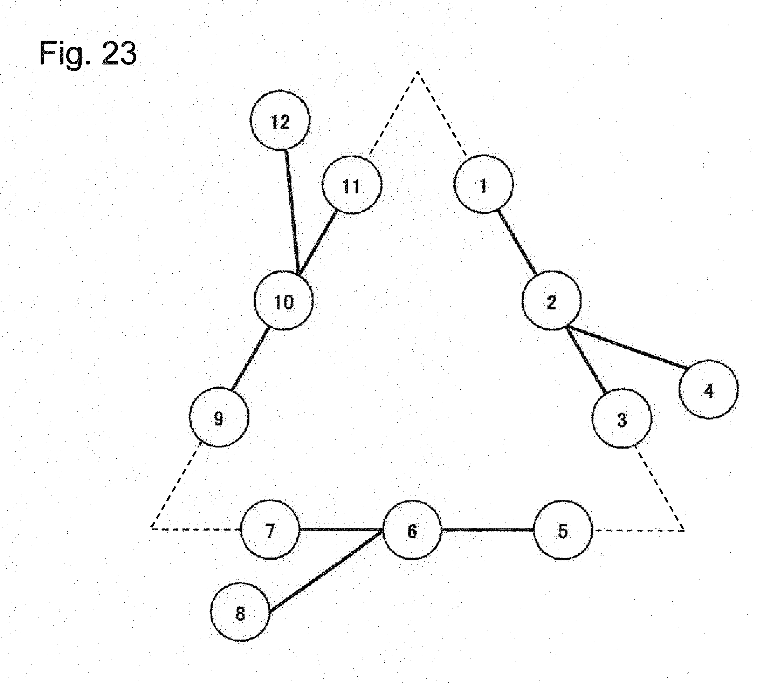

Fig. 23 is a diagram illustrating an example of a claim tree output by a disposition data output unit 154, based on basic polygon data and side data adjusted by the disposition data adjustment unit 153. As illustrated in Fig. 23, a node circle is disposed in such a way as to form a polygon including sides of a number equal to a category number, and thereby category classification can be easily confirmed.

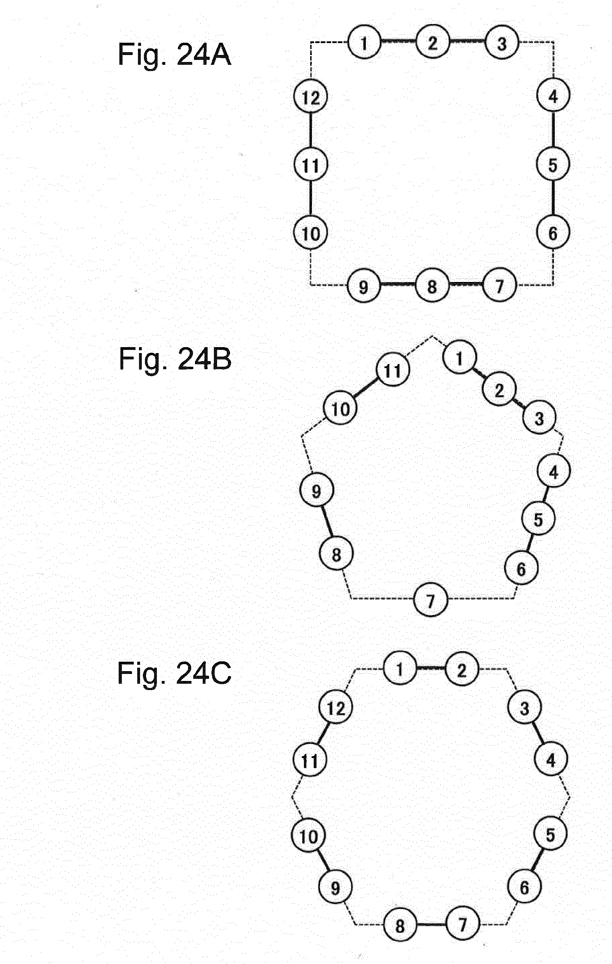

Fig. 24A is a diagram illustrating another example of a claim tree where node circles are disposed along a polygon. Fig. 24A illustrates a claim tree regarding claim data in which a category number is 4.

The number of sides of a polygon may not be always equal to a category number. In other words, a node circle may be disposed in such a way as to from a polygon including sides of a number equal to the number of independent claims for claim data including a plurality of independent claims (and dependent claims thereof) in a same category. Fig. 24B is a diagram illustrating another example of a claim tree where node circles are disposed along a polygon. In Fig. 24B, it is assumed that claims of numbers "1", "4", "7", "8", and "10" are independent claims and are classified into "method", "device", "storage medium", "method", and "device", respectively. While both of the claims of the numbers "1" and "8" are classified into the same category "method" and both of the claims of the number "4" and the number "10" are classified into the same category "device", the number of sides of a polygon may not be equal to a category number, as illustrated in Fig. 24B. In other words, assuming that numbers are basically located in ascending order (or descending order), node circles whose numbers are not adjacent to each other and that belong to the same category are disposed on different sides. In other words, as illustrated in Fig. 24B, node circles are disposed in such a way that numbers are located in ascending order (or descending order) and along a polygon that forms a different side every time a category changes. Fig. 24C is a diagram illustrating another example of a claim tree where node circles are disposed along a polygon. Fig. 24C illustrates a case where, for example, claims of numbers "1", "3", "5", "7", "9" and "11" are independent claims and are classified into "method", "device", "storage medium", "method", "device", and "storage medium", respectively. Similarly to the Fig. 24B, node circles are disposed in such a way that numbers are located in ascending order (or descending order) and along a polygon that forms a different side every time a category changes. Thereby, numbers are disposed in ascending order (or descending order), and therefore visibility of a claim structure can be improved.

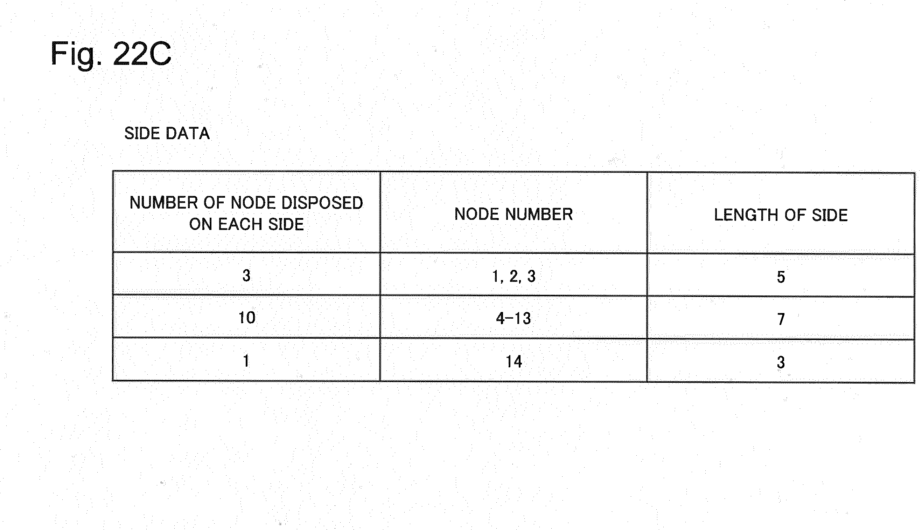

Further, a polygon formed with node circles is not limited to a regular polygon. Fig. 22C is a diagram illustrating another example of side data generated by the disposition data generation unit 452. As illustrated in Fig. 22C, the disposition data generation unit 452 may specify, for example, a side corresponding to a category having a large number of nodes included therein as being relatively long and a side corresponding to category having a small number of nodes included therein as being relatively short.

Further, a size of a node circle disposed on each side of a polygon may be uniform or may not be uniform. The disposition data generation unit 452 may specify, for example, a size of a node circle disposed along a side corresponding to a category having a large number of nodes included therein as being relatively small and a size of a node circle disposed along a side corresponding to a category having a small number of nodes included therein as being relatively large. Further, the polygon is not limited to a closed polygon.

Further, in the present third example embodiment, similarly to the second example embodiment, the claim structure extraction unit 440 may extract, in response to reception of claim data from the control unit 120, category information in the category information extraction unit 441 and store the extracted information on the subordinate relationship storage unit 442, regardless of presence or absence of a display instruction for each category. The claim tree generation unit 450 may generate display form data for performing display different for each category and store the generated data on the disposition data storage unit 453, when category information is being stored on the subordinate relationship storage unit 442.

As described above, according to the present third example embodiment, the claim structure extraction unit 440 extracts category information of each claim, and the claim tree generation unit 450 displays a node circle by a form different for each category of a claim in a claim tree. Thereby, the present example embodiment has an advantageous effect that a user can easily confirm category classification, and therefore visibility of a claim structure can be further improved.

Further, the claim tree generation unit 450 displays a claim tree in which a node circle is disposed to form a polygon including a category number as the number of sides, and thereby the present example embodiment has an advantageous effect that visibility of a claim structure can be further improved.

Display for each depth of hierarchy described in the second example embodiment and display for each category described in the present third example embodiment may be displayed in a claim tree at the same time. For example, the depth of hierarchy and a category may be displayed by a tone of a color and a difference in color, respectively.

Fourth Example Embodiment

Next, a fourth example embodiment based on the above-described first to third example embodiments will be described. In the following description, a component similar to the component of the first to third example embodiments is assigned with the same reference sign, and thereby overlapping description will be omitted.

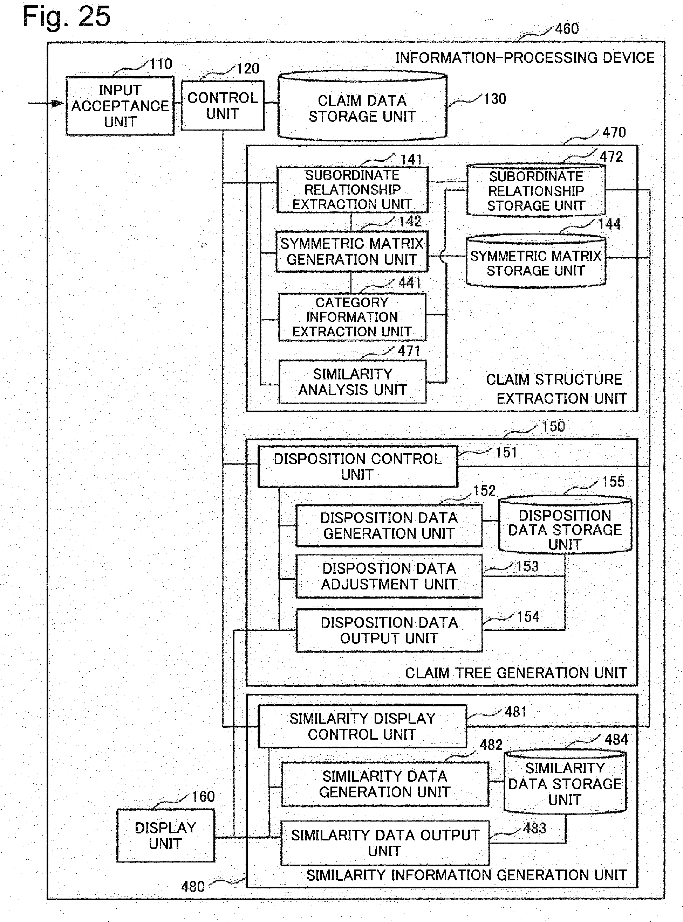

Fig. 25 is a block diagram illustrating a configuration of an information processing device 460 according to the present fourth example embodiment. As illustrated in Fig. 25, the information processing device 460 according to the present fourth example embodiment includes a claim structure extraction unit 470 instead of the claim structure extraction unit 440 of the information processing device 430 according to the third example embodiment described by referring to Fig. 17, and further includes a similarity information generation unit 480.

The claim structure extraction unit 470 includes a subordinate relationship storage unit 472 instead of the subordinate relationship storage unit 442 of the claim structure extraction unit 440 according to the third example embodiment, and further includes a similarity analysis unit 471.

The similarity information generation unit 480 includes a similarity display control unit 481, a similarity data generation unit 482, a similarity data output unit 483, and a similarity data storage unit 484.

The information processing device 460 according to the present fourth example embodiment includes a function of displaying similarity between claims in an identifiable manner, in addition to the function of the information processing device 430 described in the third example embodiment.

As described above, a claim is classified into a category such as a device, a method, a system, and the like. For example, a claim classified into a category of a method (hereinafter, referred to as a "method claim") includes a step of solving an object described in the specification. Further, a claim classified into a category of a device (hereinafter, referred to as a "device claim") includes a component of a device for solving the object.

One piece of claim data may include claims (e.g., a method claim and a device claim) in which components forming the claims are substantially similar but categories are different. For example, a device claim that is "a device including means configured to execute A1, means configured to execute A2, and means configured to execute A3" and a method claim that is "a method including a step of executing A1, a step of executing A2, and a step of executing A3" may be included in one piece of claim data. A claim in which components are substantially similar to components of a certain claim but a category is different in this manner will be hereinafter referred to as a "similar claim".

When a similar claim included in one piece of claim data in this manner can be easily confirmed, claim structure analysis is made easier. In the present fourth example embodiment, processing of extracting a similar claim and displaying the similar claim in an identifiable manner will be described.

It is assumed that subordinate relationship information including the category information illustrated in Fig. 18 is being stored on the subordinate relationship storage unit 472 by the operation described in the third example embodiment. It is assumed that the symmetric matrix illustrated in Fig. 7 is being stored on a symmetric matrix storage unit 144.

A control unit 120 according to the present fourth example embodiment notifies a subordinate relationship extraction unit 141 of claim data read from a claim data storage unit 130 and notifies of the similarity analysis unit 471 of the data.

The similarity analysis unit 471 acquires, when receiving the claim data, category information extracted by a category information extraction unit 441 as described in the third example embodiment. The similarity analysis unit 471 extracts a similarity degree between claims included in different categories.

In the similarity analysis unit 471, a similarity degree is defined in advance. For example, a ratio of matching between wordings included in two claims, respectively, is defined as a "similarity degree". The similarity analysis unit 471 may determine, as a result of text analysis, claims in which a similarity degree is equal to or more than a threshold, e.g., "70%" (or larger than the threshold) as similar claims. For the determination of a similarity degree, an ordinary text analysis technique is usable.

With regard to, for example, the claim data illustrated in Fig. 18, the similarity analysis unit 471 first may text-analyze a claim 1 and a claim 5. When as a result of the text analysis, a ratio of matching between wording included in the claim 1 and wording included in the claim 5 is equal to or more than a threshold, the similarity analysis unit 471 determines that the claim 5 is a similar claim of the claim 1.

The similarity analysis unit 471 similarly text-analyzes a claim 9, calculates a ratio of matching with wording included in the claim 1, compares the ratio with the threshold, and thereby determines whether the claim 9 is a similar claim of the claim 1.

As described above, the similarity analysis unit 471 analyzes a similarity degree between claims included in different categories and adds the result to the subordinate relationship information stored on the subordinate relationship storage unit 472. It is assumed that the similarity analysis unit 471 has determined that the wordings included in the claim 5 and the claim 9 are matched with the wording included in the claim 1 at a ratio equal to or more than the threshold. In this case, similarity information indicating that the claim 5 and the claim 9 are similar claims of the claim 1 is added to the subordinate relationship storage unit 472.

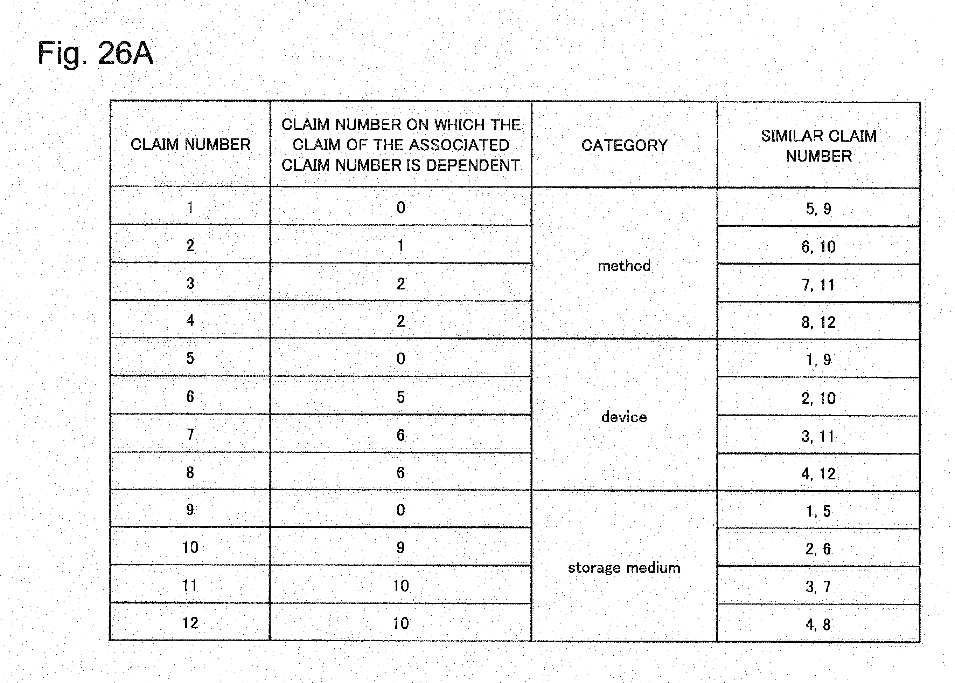

Fig. 26A is a diagram illustrating one example of subordinate relationship information including similarity information added to the subordinate relationship storage unit 472 as described above. As illustrated in Fig. 26A, a number of a similar claim is associated with each claim.

It is assumed that as described in the third example embodiment, a claim tree is being displayed on a display unit 160 in an identifiable manner by a claim tree generation unit 150 for each category as in Fig. 20. At that time, it is assumed that a user has instructed an input acceptance unit 110 to display, for example, a similar claim of a claim 1. The instruction from the user may be, for example, clicking a node circle 1 or pointing a cursor at the node circle 1.

The input acceptance unit 110 notifies, when detecting the instruction from the user, the control unit 120 of the fact. The control unit 120 instructs, in response to the notification, the similarity information generation unit 480 to display similarity information. The similarity information generation unit 480 reads, when receiving the display instruction for similarity information, subordinate relationship information including similarity information by the similarity display control unit 481 from the similarity relationship storage unit 472 and reads disposition data from a disposition data storage unit 155. The similarity display control unit 481 notifies the similarity data generation unit 482 of the read subordinate relationship information and disposition data.

The similarity data generation unit 482 generates similarity data for displaying similar claims in an identifiable manner, based on the received similarity information and disposition data. The similarity data generation unit 482 generates, for example, similarity data for displaying a line (hereinafter, referred to as a "similar link" in some cases) that connects similar claims. In this case, the similarity data generation unit 482 calculates coordinate values of a start point and an end point of a similar link. It is assumed that the received disposition data include a coordinate value in such a way that a node circle is disposed along a basic circle.

In the example illustrated in Fig. 26A, similar claims of the claim 1 are the claim 5 and the claim 9. The similarity data generation unit 482 calculates coordinate values of start points and end points of similar links that connect a node circle 1 and a node circle 5 and the node circle 1 and a node circle 9, respectively, based on coordinate values of respective central points of the node circles 1, 5, and 9 and respective central points of a node circle and a basic circle read from the disposition data storage unit 155.

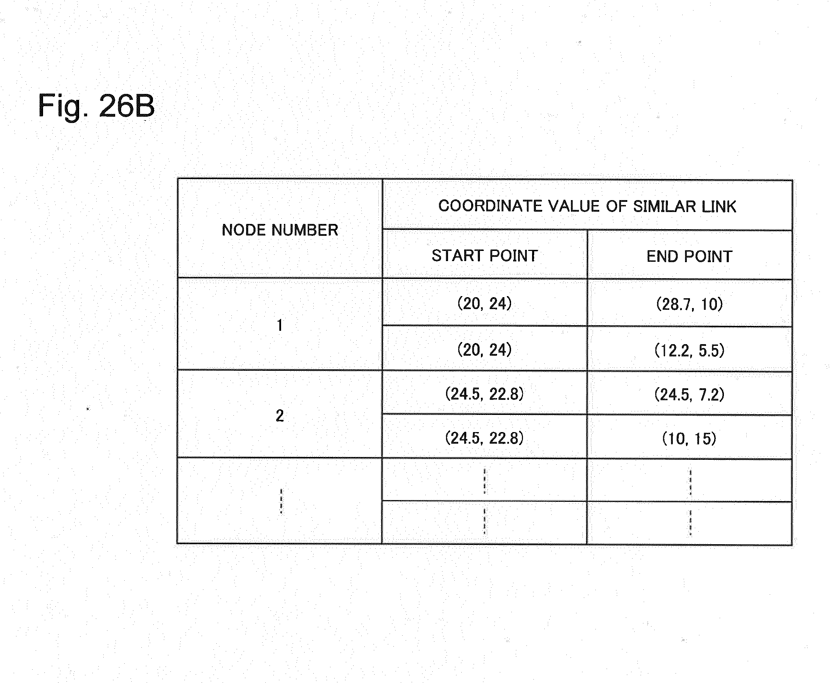

The similarity data generation unit 482 stores the calculated coordinate values on the similarity data storage unit 484 as similarity data. Fig. 26B is a diagram illustrating one example of the similarity data generated by the similarity data generation unit 482. As illustrated in Fig. 26B, the similarity data include, for example, a node number and respective coordinate values of a start point and an end point of a similar link.

When similarity data is generated by the similarity data generation unit 482, the similarity display control unit 481 instructs the similarity data output unit 483 to output the similarity data. The similarity data output unit 483 reads, based on the instruction, the similarity data from the similarity data storage unit 484 and outputs the read data to the display unit 160.

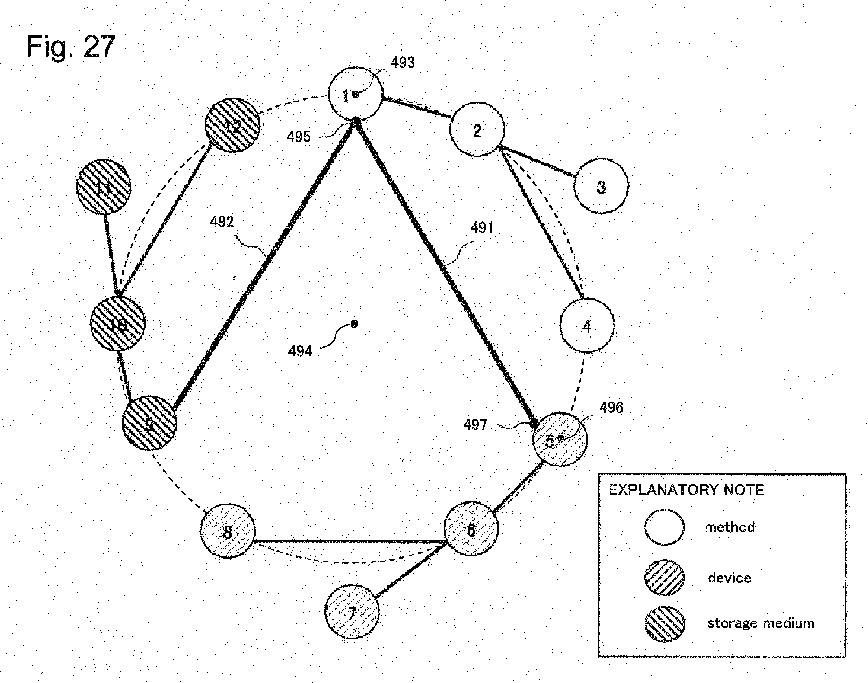

Fig. 27 is a diagram illustrating one example of a claim tree in which similarity information is output based on similarity data generated by the similarity data generation unit 482. As illustrated in Fig. 27, as similar claims of a claim 1, claims 5 and 9 are connected to the claim 1 by similar links 491 and 492, respectively. As illustrated in Fig. 27, a start point of the similar link 491 may be, for example, an intersection 495 of a line connecting a central point 493 of a node circle and a central point 494 of a basic circle and a circumference of the node circle. Similarly, an end point of the similar link 491 may be, for example, an intersection 497 of a line connecting a central point 496 of a node circle and the central point 494 of the basic circle and a circumference of the node circle. A similar case is applicable to a start point and an end point of another similar link.

A similar link generated by the similarity data generation unit 482 may be displayed in an identifiable manner from a link between node circles having a subordinate relationship described in the third example embodiment and the like. Display may be performed using, for example, a different color or a different thickness. Here, a similar claim is displayed in an identifiable manner by a similar link but the way to display the similar claim is not limited thereto. A node circle indicating a similar claim may be displayed, for example, by the same color, pattern, shape, and the like. Alternatively, a node circle indicating a similar claim may be displayed in a blinking manner or the like.

As described above, according to the present fourth example embodiment, the claim structure extraction unit 470 extracts a similarity degree between claims, and the similarity information generation unit 480 displays claims that are similar in an identifiable manner The present example embodiment has an advantageous effect that a user can easily confirm a similar claim, and therefore visibility of a claim structure can be further improved.


Fifth Example Embodiment


Next, a fifth example embodiment based on the above-described first to fourth example embodiments will be described.

In the present fifth example embodiment, an operation for facilitating a structure comparison between two or more pieces of claim data will be described.

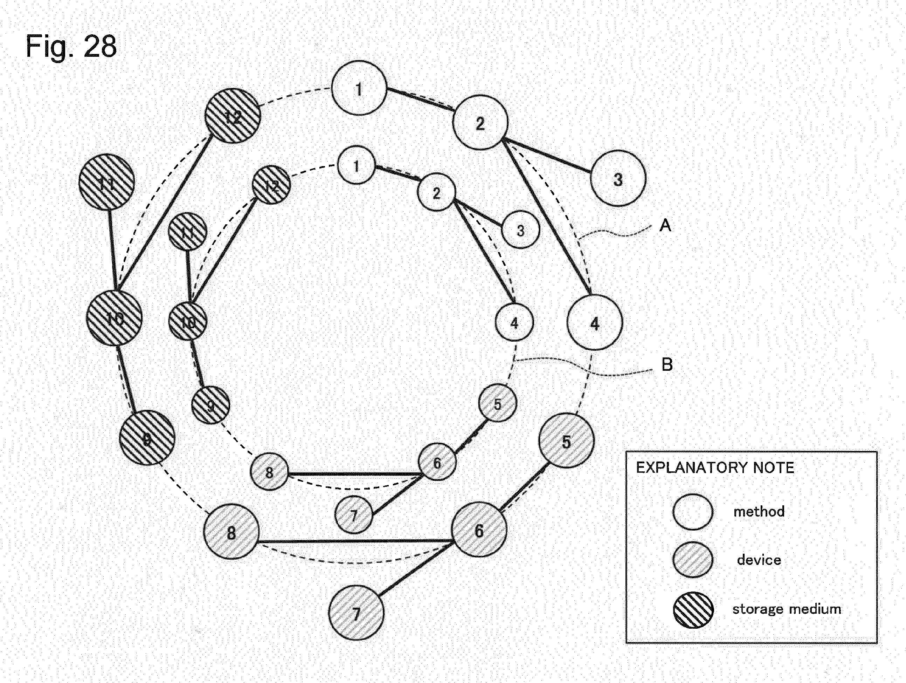

Fig. 28 is a diagram exemplarily illustrating a claim tree displayed by an information processing device according to the fifth example embodiment. As illustrated in Fig. 28, in the fifth example embodiment, it is described that claim trees A and B regarding two types of claim data, respectively, are concentrically displayed. While two types of claim data are described, three types or more of claim data are applicable.

The display operation will be described with reference to Fig. 25.

A user issues a selection instruction for a plurality of pieces of claim data to be compared to an input acceptance unit 110, and the input acceptance unit 110 notifies a control unit 120 of the fact. The control unit 120 reads a plurality of pieces of selected claim data from a claim data storage unit 130 and notifies a claim structure extraction unit 470 of the read data.

The claim structure extraction unit 470 extracts, as described in the first example embodiment, a subordinate relationship, a symmetric matrix, and category information regarding the plurality of pieces of selected claim data, respectively, and stores the extracted information on the subordinate relationship storage unit 472 and the symmetric matrix storage unit 144.

The control unit 120 instructs a claim tree generation unit 150 to concentrically display a plurality of claim trees regarding the read claim data. A disposition data generation unit 152 generates disposition data regarding the plurality of pieces of selected claim data, as described in the first example embodiment. At that time, the disposition data generation unit 152 matches coordinate values of central points of respective basic circles where node circles are disposed in order to concentrically display each claim tree and generates disposition data in such a way as to make radii of the basic circles different.

The disposition data output unit 154 concentrically displays, as illustrated in Fig. 28, claim trees regarding a plurality of pieces of claim data, based on the disposition data generated by the disposition data generation unit 152.

It is conceivable that, for example, claim trees based on the scope of claim for patent attached to an application (at the time of filing) and the scope of claim for patent for which registration of establishment has been made, respectively, are concentrically displayed. In Fig. 28, when, for example, a claim tree regarding the scope of claim for patent for which registration of establishment has been made and a claim tree regarding the scope of claim for patent at the time of filing are disposed as indicated as "A" and "B", respectively, a change of a claim structure at the time of filing and upon registration of establishment can be easily confirmed.

Further, as described in the fourth example embodiment, the similarity analysis unit 471 may analyze a similarity degree between claims (e.g., claims 1) included in a plurality of pieces of selected claim data, respectively, and store similar claims on the subordinate relationship storage unit 472. The similarity information generation unit 480 may displayed similar claims in an identifiable manner on the display unit 160 by connecting, by a similar link, for example, a claim 1 in a claim tree A and a claim 2 in a claim tree B or the like.

As described above, according to the fifth example embodiment, the claim tree generation unit 150 concentrically displays claim trees regarding two or more pieces of claim data. The present example embodiment has an advantageous effect that a user easily compares two or more claim structures.

Here, a plurality of claim trees is concentrically disposed. However, the present example embodiment is not limited thereto, and a plurality claim trees may alternatively be disposed in a concentrically ellipsoidal manner, or may be disposed in such a way that a plurality of polygons in which central points are matched are overlapped. Alternatively, without limitation to overlapped disposition, a plurality of claim trees may be disposed side by side.

Sixth Example Embodiment

Next, a sixth example embodiment based on the above-described first example embodiment will be described. In the following description, a component similar to the component of the first example embodiment is assigned with the same reference sign, and thereby overlapping description will be omitted.

In the present sixth example embodiment, an operation for facilitating a structure comparison between two or more pieces of claim data by using an indicator will be described.

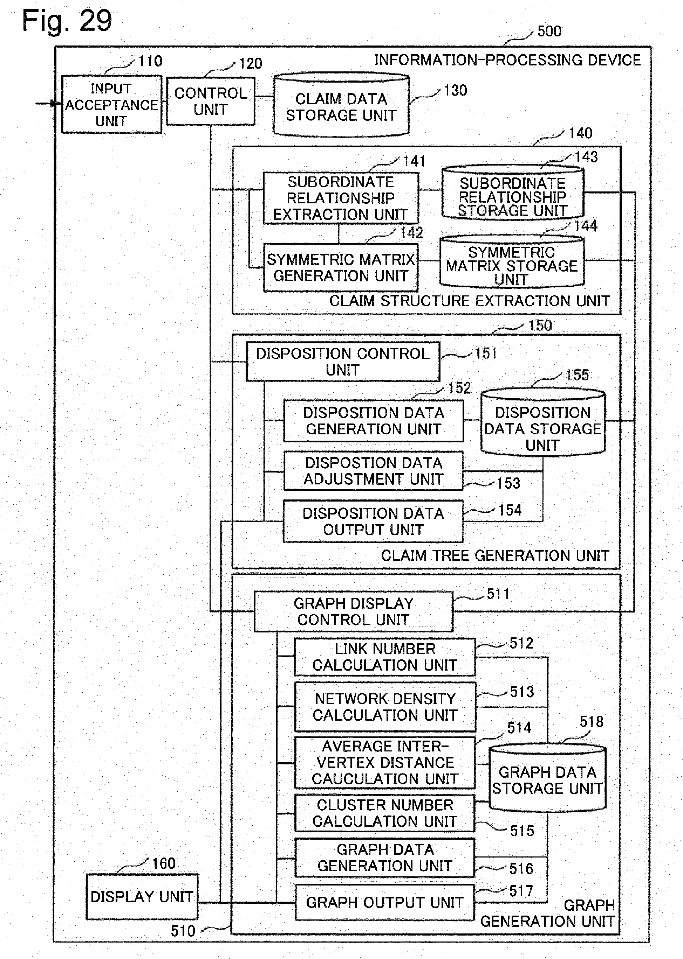

Fig. 29 is a block diagram illustrating a configuration of an information processing device 500 according to the present sixth example embodiment. As illustrated in Fig. 29, the information processing device 500 includes a graph generation unit 510, in addition to the configuration of the information processing device 100 described in the above-described first example embodiment.

The graph generation unit 510 includes a graph display control unit 511, a link number calculation unit 512, a network density calculation unit 513, an average inter-vertex distance calculation unit 514, a cluster number calculation unit 515, a graph data generation unit 516, a graph output unit 517, and a graph data storage unit 518.

In the first example embodiment to the fifth example embodiment, it has been described that of pieces of claim data analyzed as described above, a claim tree regarding one or a plurality of pieces of claim data is displayed on the display unit 160. Description will be made on a matter that the information processing device 500 according to the present sixth example embodiment displays a structure of each of a plurality of pieces of claim data analyzed as described above on one graph by using an indicator and thereby easily compares the structures of the plurality of pieces of claim data.

In the present sixth example embodiment, examples using, as the indicator, a link number, a network density, an average inter-vertex distance, and a cluster number will be described without limitation thereto.

Further, it is assumed that subordinate relationship information, a symmetric matrix, and disposition data regarding a plurality of pieces of claim data are being stored on a subordinate relationship storage unit 143, a symmetric matrix storage unit 144, and a disposition data storage unit 155, respectively.

An outline of the components of the graph generation unit 510 will be described.

The graph display control unit 511 reads, when receiving an instruction for graph display from a control unit 120, subordinate relationship information, a symmetric matrix, and disposition data from the subordinate relationship storage unit 143, the symmetric matrix storage unit 144, and the disposition data storage unit 155, respectively, and controls generation of a graph.

The link number calculation unit 512 calculates a link number, based on the information read by the graph display control unit 511, and stores the result on the graph data storage unit 518. The link number refers to the number of links between claims having a subordinate relationship included in one piece of claim data, as described in the first example embodiment.

The network density calculation unit 513 calculates a network density, based on the information read by the graph display control unit 511, and stores the result on the graph data storage unit 518. The network density refers to a ratio of a link number actually connecting among node circles to a total number of links in which all node circles are connected.

The average inter-vertex distance calculation unit 514 calculates an average inter-vertex distance a definition of which will be described later, based on the information read by the graph display control unit 511, and stores the result on the graph data storage unit 518.

The cluster number calculation unit 515 calculates a cluster number a definition of which will be described later, based on the information read by the graph display control unit 511, and stores the result on the graph data storage unit 518.

The graph data generation unit 516 generates graph data for displaying a graph in which, for example, the horizontal axis is designated as a node number and the vertical axis is designated as an indicator using each calculated value described above, and stores the generated graph data on the graph data storage unit 518.

The graph output unit 517 outputs a graph to a display unit 160, based on the graph data stored on the graph data storage unit 518.

Next, an operation for outputting a graph by the graph generation unit 510 will be described.

It is assumed that a user has made an instruction for graph display regarding claim data. An input acceptance unit 110 notifies the control unit 120 of the instruction.

The control unit 120 instructs, when receiving the graph display instruction from the input acceptance unit 110, the graph display control unit 511 to perform graph display. The graph display control unit 511 reads, in accordance with the instruction, subordinate relationship information, a symmetric matrix, and disposition data from the subordinate relationship storage unit 143, the symmetric matrix storage unit 144, and the disposition data storage unit 155, respectively.

The graph display instruction includes an indicator for graph display. When the graph display instruction includes "a link number", the graph display control unit 511 notifies the link number calculation unit 512 of the read information.

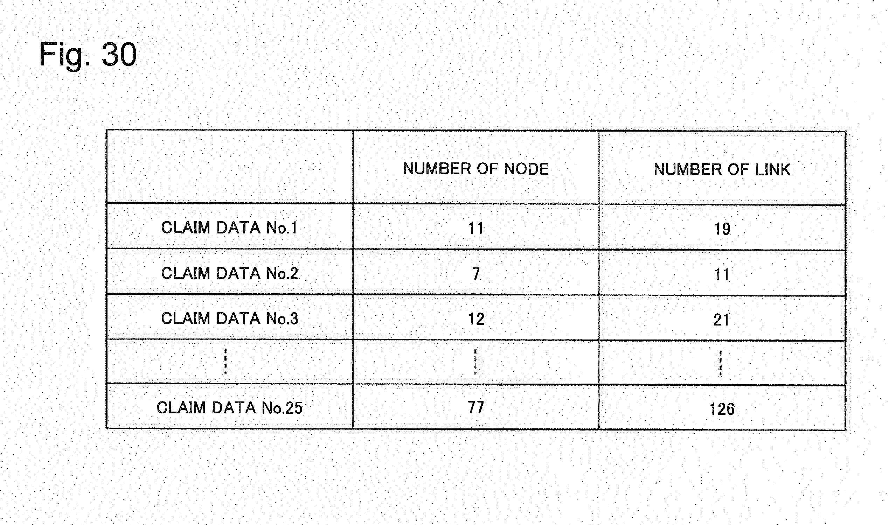

The link number calculation unit 512 calculates the number of nodes and a link number included in respective pieces of claim data, based on the received information. The number of nodes is equal to the number of claims. The link number is determined as a total number of "1"/2 in a symmetric matrix. The link number calculation unit 512 stores the calculated link number and the number of nodes on the graph data storage unit 518 in association with each piece of claim data. Fig. 30 is a diagram illustrating an example of the number of nodes and a link number stored on the graph data storage unit 518, for example, for claim data No. 1 to claim data No. 25.

The graph display control unit 511 instructs, when the link number and the number of nodes are stored on the graph data storage unit 518, the graph data generation unit 516 to generate graph data regarding the link number and the number of nodes. The graph data generation unit 516 reads the link number and the number of nodes from the graph data storage unit 518 in accordance with the instruction and generates, based on these numbers, graph data such as a scale for displaying a graph of values in which, for example, the number of nodes is set as the horizontal axis and a link number is set as the vertical axis. The graph data generation unit 516 stores the generated graph data on the graph data storage unit 518.

When the graph data are stored on the graph data storage unit 518, the graph display control unit 511 instructs the graph output unit 517 to output a graph in which a link number is an indicator. The graph data output unit 517 displays, in accordance with the instruction, a graph in which a link number is an indicator on the display unit 160, based on the graph data stored in the graph data storage unit 518.

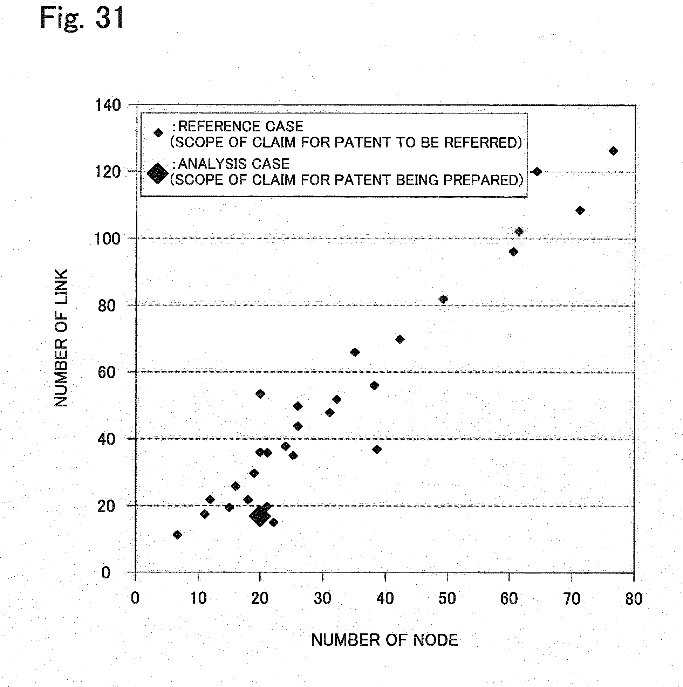

Fig. 31 is a diagram illustrating one example of a graph regarding a link number. As illustrated in Fig. 31, for example, respective pieces of claim data of the scope of claim for patent (analysis case) being prepared by a user and the scope of claim for patent (reference case) to be referred to can be displayed on the same graph as in Fig. 31. Thereby, a claim structure of a related case can be referred to, and thereby a claim structure of the scope of claim for patent to be prepared can be more deeply studied.

The network density calculation unit 513, the average inter-vertex distance calculation unit 514, and the cluster number calculation unit 515 are considered in a similar manner.

When a graph display instruction includes "a network density", the network density calculation unit 513 calculates a network density, based on information received from the graph display control unit 511. A network density D is calculated based on following equation (9).

$$D = \frac{2H}{N(N-1)} \quad \cdots (9)$$

Herein, H is a link number and N is the number of nodes.

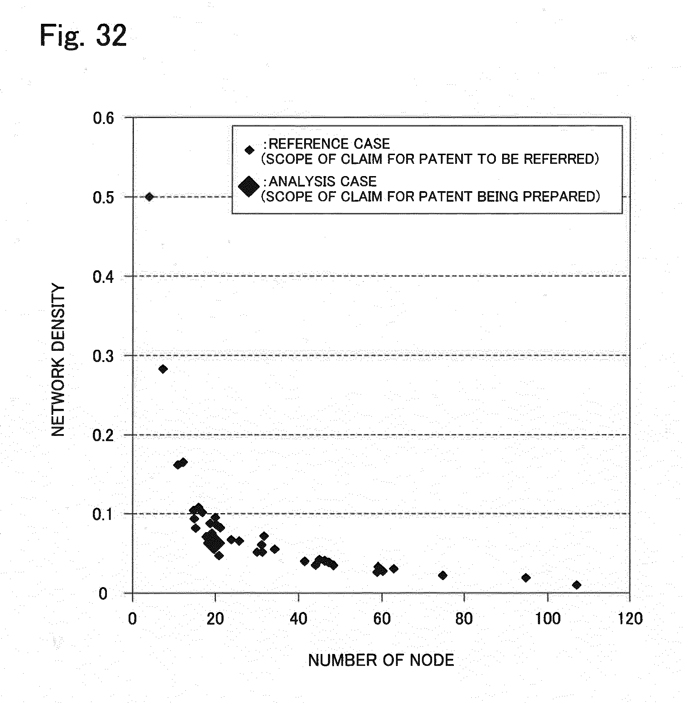

The graph data generation unit 516 generates graph data, based on the network density calculated as described above. Fig. 32 is a diagram exemplarily illustrating a graph of a network density with respect to the number of nodes.

When the graph display instruction includes "an average inter-vertex distance", the average inter-vertex distance calculation unit 514 calculates an average inter-vertex distance in which node circles are vertexes in a claim tree, based on information received from the graph display control unit 511. An average inter-vertex distance L can be calculated based on following equation (10).

$$L = \frac{2}{N(N-1)} \sum_{1 \leq i \leq j \leq N} d_{ij} \quad \cdots (10)$$

Herein, N is the number of nodes and $d_{ij}$ is a component (i,j) of a symmetric matrix.

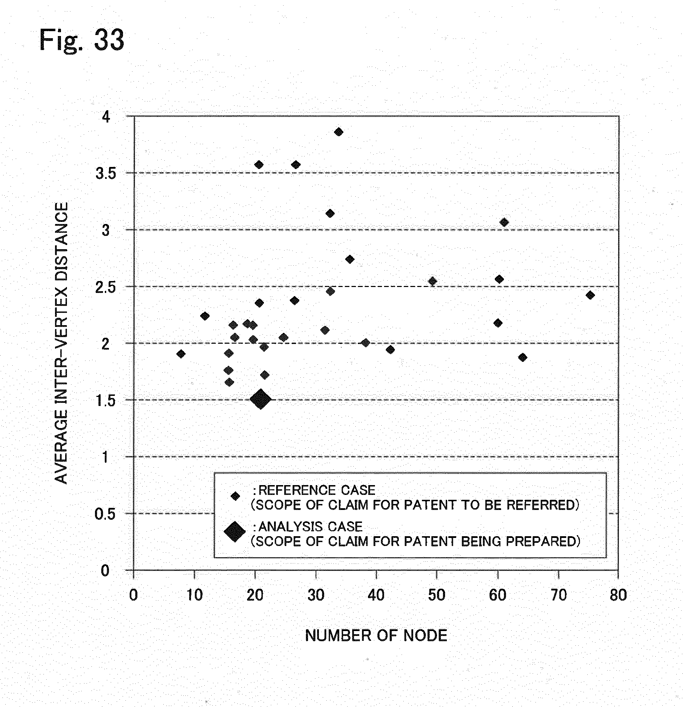

The graph data generation unit 516 generates graph data, based on the average inter-vertex distance calculated as described above. Fig. 33 is a diagram exemplarily illustrating a graph of an average inter-vertex distance with respect to the number of nodes.

When the graph display instruction includes "a cluster number", the cluster number calculation unit 515 extracts a number of clusters, based on information received from the graph display control unit 511. The number of clusters refers to a total number of clusters (an independent claim being not linked, i.e. having no dependent claim is also counted as one cluster) in which a set of nodes linked to each other is one unit (one cluster) in a claim tree. In other words, the cluster number is equivalent to the number of independent claims, and the number of claims in which, for example, the depth of hierarchy described in the second example embodiment is "1" may be set as a cluster number.

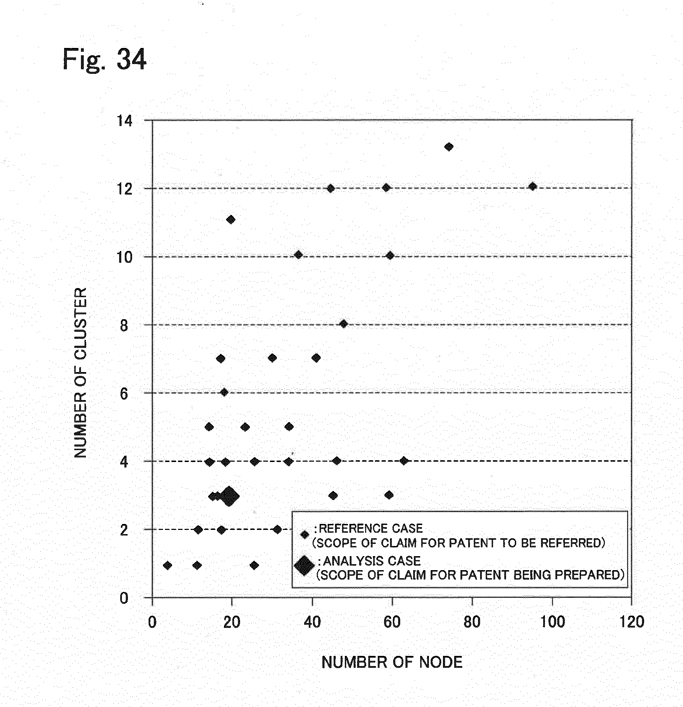

The graph data generation unit 516 generates graph data, based on the cluster number calculated as described above. Fig. 34 is a diagram exemplarily illustrating a graph of a cluster number with respect to the number of nodes.

Further, in the present sixth example embodiment, similarly to the third example embodiment, the graph display control unit 511 may generate, regardless of presence or absence of a graph display instruction, graph data for each indicator described above in response to generation of subordinate relationship information, a symmetric matrix, and disposition data and store the generated data on the graph data storage unit 518.

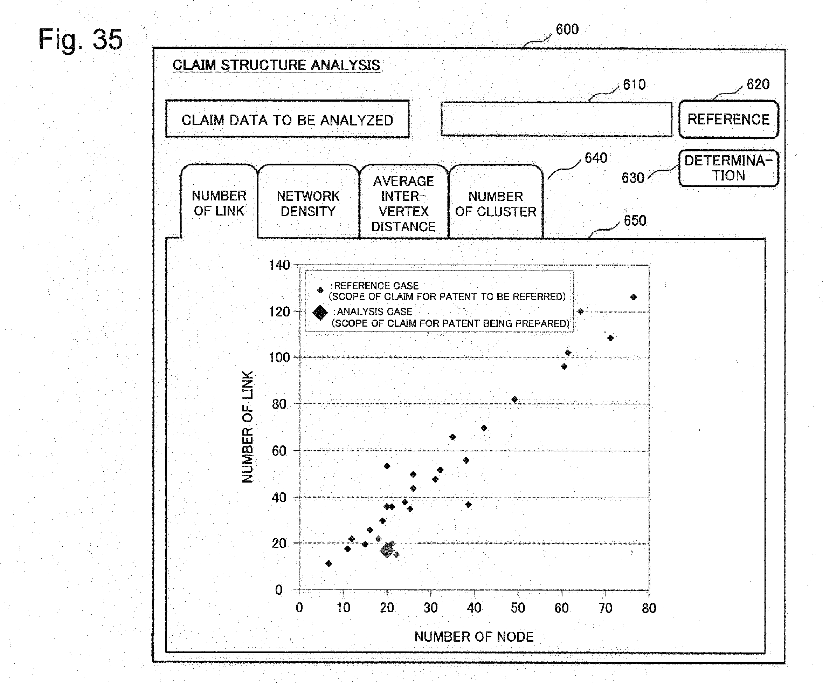

Fig. 35 is a diagram illustrating one example of a graph display screen 600. The graph display screen 600 illustrated in Fig. 35 includes, for example, a field 610 for designating claim data to be analyzed, a reference button 620, a determination button 630, a tab 640 for designating a graph display instruction and an indicator, and a graph display area 650.

At the timing of designating, for example, claim data to be analyzed in the field 610 and pressing the determination button 630, the information processing device 500 may generate subordinate relationship information, a symmetric matrix, and disposition data as well as graph data and store these items on the graph data storage unit 518. When receiving, from a user, a graph display instruction and designation of an indicator through a click and the like of the tab 640 indicating an indicator, the control unit 120 instructs the graph display control unit 511 to perform graph display. The graph display control unit 511 may instruct the graph output unit 517 to perform graph display in accordance with the instruction, and the graph output unit 517 may output a graph to the display unit 160, based on graph data being stored on the graph data storage unit 518 and relating to the designated indicator.

Fig.35 illustrates an example in which a graph regarding a link number is displayed in response to a "link number" tab being clicked. Further, in this example, for example, a point or a graphic plotted on a graph may be linked to a specific content thereof. In other words, when a point or a graphic plotted on a graph is clicked, claim data corresponding thereto or a Japanese laid-open patent publication may be opened.

As described above, according to the sixth example embodiment, the graph generation unit 510 displays a graph based on various types of indicators, based on information generated from a plurality of pieces of claim data. Therefore, the present example embodiment has an advantageous effect that a user can easily compare a plurality of claim structures and can more deeply study the scope of claim for patent or a description, for example, from a result of the comparison, whereby quality thereof can be improved.

Seventh Example Embodiment

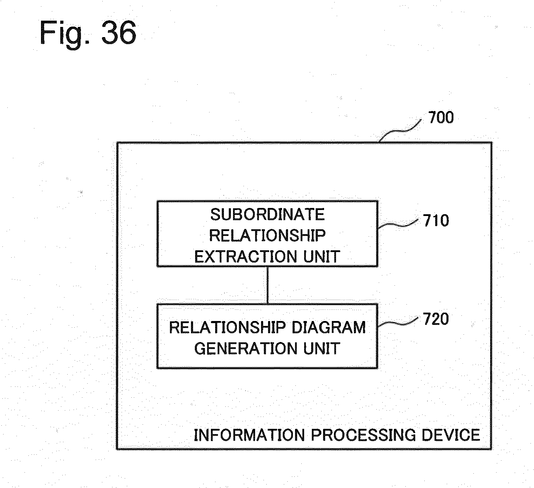

Fig. 36 is a block diagram illustrating a configuration of an information processing device 700 according to a seventh example embodiment of the present invention. The information processing devices 100, 400, 430, 460, and 500 according to the above-described first example embodiment to sixth example embodiment are based on the information processing device 700 according to the present seventh example embodiment.

As illustrated in Fig. 36, the information processing device 700 includes a subordinate relationship extraction unit 710 and a relationship diagram generation unit 720.

The subordinate relationship extraction unit 710 extracts a claim number and a subordinate relationship between claims from claim data including a plurality of claims.

The relationship diagram generation unit 720 generates, based on the subordinate relationship between claims, a relationship diagram in which the claim number is disposed on or in a periphery of circularly-arranged points or a circling line.

The relationship diagram generation unit 720 includes the claim tree generation unit 150 in the first example embodiment, and a relationship diagram includes a claim tree in the first example embodiment.

As described above, the present seventh example embodiment has an advantageous effect that even when the number of claims is large, a claim structure thereof can be easily confirmed.

The present invention can be also carried out by combining the example embodiments. In other words, various combinations such as display of both hierarchical information and category information in a claim tree, display of similarity information in a claim tree together with hierarchical information and category information, and the like are possible.

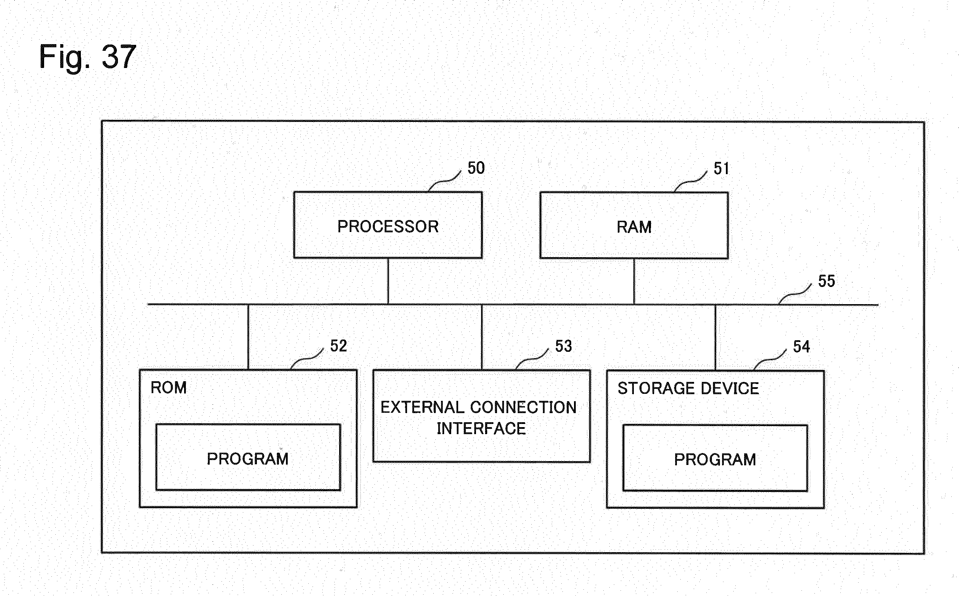

Each unit of the information processing device illustrated in Fig. 1 and the like is realized in a hardware resource exemplarily illustrated in Fig. 37. In other words, a configuration illustrated in Fig. 37 includes a processor 50, a random access memory (RAM) 51, a read only memory (ROM) 52, an external connection interface 53, and a storage device 54.

A function indicated in each block in the information processing device illustrated in Fig. 1 and the like may be also realized by reading, using the processor 50 illustrated in Fig. 37, various types of software programs (computer programs) stored on the ROM 52 or the storage device 54 onto the RAM 51 and executing the programs. Alternatively, a part or all of the function indicated in each block illustrated in Fig. 1 and the like may be also realized as hardware.

Further, the present invention described using each example embodiment as an example is achieved by supplying a computer program capable of realizing the above-described function to the information processing device and executing the computer program by being read onto the RAM 51 by the processor 50.

The supplied computer program may be stored on a readable and writable memory (transitory storage medium) or a computer-readable storage device such as a hard disk device. In such a case, it is conceivable that the present invention includes codes representing the computer program or a storage medium storing the computer program.

As described above, the present invention has been described using the above-described example embodiments as typical examples. However, the present invention is not limited to the above-described example embodiments. In other words, the present invention can be applied with various forms understood by those skilled in the art without departing from the scope of the present invention.

This application is based upon and claims the benefit of priority from Japanese patent application No. 2015-188696, filed on September 25, 2015, the disclosure of which is incorporated herein in its entirety by reference.

[Reference signs List]

| | |
|---|---|
| 50 | Processor |
| 51 | RAM |
| 52 | ROM |
| 53 | External connection interface |
| 54 | Storage device |
| 100, 400, 430, 460, 500, 700 | Information processing device |
| 110 | Input acceptance unit |
| 120 | Control unit |
| 130 | Claim data storage unit |

| | |
|---|---|
| 140, 410, 440, 470 | Claim structure extraction unit |
| 141 | Subordinate relationship extraction unit |
| 142 | Symmetric matrix generation unit |
| 143, 412, 442, 472 | Subordinate relationship storage unit |
| 144 | Symmetric matrix storage unit |
| 150, 420, 450 | Claim tree generation unit |
| 151, 421, 451 | Disposition control unit |
| 152, 422, 452 | Disposition data generation unit |
| 153 | Disposition data adjustment unit |
| 154 | Disposition data output unit |
| 155, 423, 453 | Disposition data storage unit |
| 160 | Display unit |
| 411 | Hierarchical information extraction unit |
| 441 | Category information extraction unit |
| 471 | Similarity analysis unit |
| 480 | Similarity information generation unit |
| 481 | Similarity display control unit |
| 482 | Similarity data generation unit |
| 483 | Similarity data output unit |
| 484 | Similarity data storage unit |
| 510 | Graph generation unit |
| 511 | Graph display control unit |
| 512 | Link number calculation unit |
| 513 | Network density calculation unit |
| 514 | Average inter-vertex distance calculation unit |
| 515 | Cluster number calculation unit |
| 516 | Graph data generation unit |
| 517 | Graph output unit |
| 518 | Graph data storage unit |
| 600 | Graph display screen |
| 710 | Subordinate relationship extraction unit |
| 720 | Relationship diagram generation unit |

## Claims

1. An information processing device comprising:

   subordinate relationship extraction means for extracting a claim number and a subordinate relationship between claims from claim data including a plurality of claims; and
   relationship diagram generation means for generating, based on the subordinate relationship between claims, a relationship diagram in which the claim number is disposed on or in a periphery of circularly-arranged points or a circling line.

2. The information processing device according to claim 1, wherein
   the relationship diagram generation means disposes, in the relationship diagram, a connection line that is a line for connecting claim areas where the claim numbers extracted by the subordinate relationship extraction means as being regarded as having a subordinate relationship are disposed.

3. The information processing device according to claim 2, wherein
   the relationship diagram generation means adjusts, in the relationship diagram, a location of the claim area and a location of the connection line in such a way as to eliminate overlapping between the claim areas or overlapping between the claim area and the connection line.

4. The information processing device according to claim 2 or 3, wherein
   the relationship diagram generation means disposes the claim area along a circle, an ellipse, or a polygon in the relationship diagram.

5. The information processing device according to any one of claims 2 to 4, further comprising:

   hierarchical information extraction means for extracting a depth of hierarchy for each of the claims, based on the subordinate relationship between claims, wherein
   the relationship diagram generation means displays, in the relationship diagram, the claim area in a display form different for each depth of hierarchy extracted by the hierarchical information extraction means.

6. The information processing device according to any one of claims 2 to 5, further comprising:

   category information extraction means for extracting a category to which each of the claims belongs from the claim data, wherein
   the relationship diagram generation means displays, in the relationship diagram, the claim area in a display form different for each category extracted by the category information extraction means.

7. The information processing device according to any one of claims 2 to 6, further comprising
   similarity analysis means for analyzing a similarity degree between wordings included in the claims from the claim data, wherein
   the relationship diagram generation means displays, in an identifiable manner in the relationship diagram, the claim area assigned with a number of a claim similar to a designated claim in an identifiable manner, based on the similarity degree.

8. The information processing device according to claim 6, wherein
   the relationship diagram generation means disposes, in the relationship diagram, the claim area, in which the claim number is disposed, along a polygon in such a way that the claim number is disposed in ascending order or descending order on a different side of the polygon for a different extracted category, the polygon having a plurality of sides, number of the plurality of sides being equal to number of independent claims that do not cite another claim.

9. The information processing device according to claim 3, wherein
   the relationship diagram generation means adjusts, when adjusting the location of the claim area in the relationship diagram, the location of each claim area in such a way as to move the claim area in a direction where a distance between a center of the claim area and a center of a graphic along which a plurality of the claim areas are located increases.

10. The information processing device according to any one of claims 2 to 9, wherein
    the relationship diagram generation means concentrically disposes two or more of the relationship diagrams where the claim areas are generated along circles, respectively, based on the claim numbers and the subordinate relationships between claims extracted from two or more pieces of the claim data, respectively.

11. The information processing device according to any one of claims 2 to 10, further comprising
    graph generation means for generating a graph indicating an association between a number of the claim areas and information regarding the subordinate relationship in the relationship diagram generated by the relationship diagram generation means.

12. The information processing device according to claim 11, wherein
    the information regarding the subordinate relationship is at least any one of number of the connection lines that connect the claim areas, a ratio of the number of the connection lines that connect the claim areas to a total number of the connection lines when connecting all the claim areas, an average inter-vertex distance when the claim area in the relationship diagram is regarded as a vertex, and number of independent claims being claims that do not cite another claim in the relationship diagram.

13. The information processing device according to any one of claims 2 to 12, wherein
    the claim area is a claim graphic in which the claim number is surrounded by points or a line.

14. An information processing method comprising:

    extracting a claim number and a subordinate relationship between claims from claim data including a plurality of claims; and
    generating, based on the subordinate relationship between claims, a relationship diagram in which the claim number is disposed on or in a periphery of circularly-arranged points or a circling line.

15. A storage medium storing an information processing program that causes a computer to execute:

a process of extracting a claim number and a subordinate relationship between claims from claim data including a plurality of claims; and
a process of generating, based on the subordinate relationship between claims, a relationship diagram in which the claim number is disposed on or in a periphery of circularly-arranged points or a circling line.

# Fig. 1

# Fig. 2

| | |
|---|---|
| CLAIM DATA No.1 | 1.　An method, comprising steps of:　sending information ···, wherein the information ······.　2.　　The method according to claim 1,　wherein　the step of sending ···.　3.　　The method according to claim 1, further comprising steps of: controlling the ···. |
| CLAIM DATA No.2 | 1.　　An information processing device, comprising;　a storage unit that stores ···; a determination unit that determines whether ······. 2.　　The information processing device according to claim 1, wherein the determination unit···. |

# Fig. 3

START

↓

ACQUIRE SELECTION INSTRUCTION FOR CLAIM DATA TO BE ANALYZED — S10

↓

READ SELECTED CLAIM DATA AND NOTIFY CLAIM STRUCTURE EXTRACTION UNIT OF READ DATA — S11

↓

EXTRACT CLAIM NUMBER AND SUBORDINATE RELATIONSHIP BETWEEN CLAIMS — S12

↓

GENERATE SYMMETRIC MATRIX — S13

↓

GENERATE DISPOSITION DATA — S14

↓

DISPLAY CLAIM TREE BASED ON DISPOSITION DATA — S15

↓

END

## Fig. 4A

| CLAIM NUMBER | CLAIM NUMBER ON WHICH THE CLAIM OF THE ASSOCIATED CLAIM NUMBER IS DEPENDENT |
|---|---|
| 1 | 0 |
| 2 | 1 |
| 3 | 1 |

# Fig. 4B

200

| CLAIM NUMBER \ CLAIM NUMBER | 1 | 2 | 3 |
|---|---|---|---|
| 1 | 0 | 1 | 1 |
| 2 | 1 | 0 | 0 |
| 3 | 1 | 0 | 0 |

201

EP 3 355 261 A1

# Fig. 5A

| CLAIM NUMBER | CLAIM NUMBER ON WHICH THE CLAIM OF THE ASSOCIATED CLAIM NUMBER IS DEPENDENT |
|---|---|
| 1 | 0 |
| 2 | 1 |
| 3 | 2 |
| 4 | 2 |
| 5 | 0 |
| 6 | 5 |
| 7 | 6 |
| 8 | 6 |
| 9 | 0 |
| 10 | 9 |
| 11 | 10 |
| 12 | 10 |

EP 3 355 261 A1

# Fig. 5B

EP 3 355 261 A1

| | CLAIM NUMBER (i) | 1 | 2 | 3 | 4 | 5 | 6 | 7 | 8 | 9 | 10 | 11 | 12 |
|---|---|---|---|---|---|---|---|---|---|---|---|---|---|
| CLAIM NUMBER (j) | | | | | | | | | | | | | |
| 1 | | 0 | 1 | 0 | 0 | 0 | 0 | 0 | 0 | 0 | 0 | 0 | 0 |
| 2 | | 1 | 0 | 1 | 1 | 0 | 0 | 0 | 0 | 0 | 0 | 0 | 0 |
| 3 | | 0 | 1 | 0 | 0 | 0 | 0 | 0 | 0 | 0 | 0 | 0 | 0 |
| 4 | | 0 | 1 | 0 | 0 | 0 | 0 | 0 | 0 | 0 | 0 | 0 | 0 |
| 5 | | 0 | 0 | 0 | 0 | 0 | 1 | 0 | 0 | 0 | 0 | 0 | 0 |
| 6 | | 0 | 0 | 0 | 0 | 1 | 0 | 1 | 1 | 0 | 0 | 0 | 0 |
| 7 | | 0 | 0 | 0 | 0 | 0 | 1 | 0 | 0 | 0 | 0 | 0 | 0 |
| 8 | | 0 | 0 | 0 | 0 | 0 | 1 | 0 | 0 | 0 | 0 | 0 | 0 |
| 9 | | 0 | 0 | 0 | 0 | 0 | 0 | 0 | 0 | 0 | 1 | 0 | 0 |
| 10 | | 0 | 0 | 0 | 0 | 0 | 0 | 0 | 0 | 1 | 0 | 1 | 1 |
| 11 | | 0 | 0 | 0 | 0 | 0 | 0 | 0 | 0 | 0 | 1 | 0 | 0 |
| 12 | | 0 | 0 | 0 | 0 | 0 | 0 | 0 | 0 | 0 | 1 | 0 | 0 |

202

203

# Fig. 6

START

READ SUBORDINATE RELATIONSHIP AND SYMMETRIC MATRIX — S20

EXTRACT NUMBER OF NODES TO BE DISPOSED — S21

DETERMINE RADIUS OF NODE CIRCLE AND RADIUS OF BASIS CIRCLE — S22

CALCULATE ANGLE BETWEEN NODE CIRCLES — S23

CALCULATE COORDINATE VALUE FOR DISPOSING NODE CIRCLES AND LINK — S24

ADJUST CALCULATED COORDINATE VALUE — S25

END

Fig. 7

| CLAIM NUMBER (i) ⟍ CLAIM NUMBER (j) | 1 | 2 | 3 | 4 | 5 | 6 | 7 | 8 | 9 | 10 | 11 | 12 |
|---|---|---|---|---|---|---|---|---|---|---|---|---|
| 1 | 0 | 1 | 0 | 0 | 0 | 0 | 0 | 0 | 0 | 0 | 0 | 0 |
| 2 | 1 | 0 | 1 | 1 | 0 | 0 | 0 | 0 | 0 | 0 | 0 | 0 |
| 3 | 0 | 1 | 0 | 0 | 0 | 0 | 0 | 0 | 0 | 0 | 0 | 0 |
| 4 | 0 | 1 | 0 | 0 | 0 | 0 | 0 | 0 | 0 | 0 | 0 | 0 |
| 5 | 0 | 0 | 0 | 0 | 0 | 1 | 0 | 0 | 0 | 0 | 0 | 0 |
| 6 | 0 | 0 | 0 | 0 | 1 | 0 | 1 | 1 | 0 | 0 | 0 | 0 |
| 7 | 0 | 0 | 0 | 0 | 0 | 1 | 0 | 0 | 0 | 0 | 0 | 0 |
| 8 | 0 | 0 | 0 | 0 | 0 | 1 | 0 | 0 | 0 | 0 | 0 | 0 |
| 9 | 0 | 0 | 0 | 0 | 0 | 0 | 0 | 0 | 0 | 1 | 0 | 0 |
| 10 | 0 | 0 | 0 | 0 | 0 | 0 | 0 | 0 | 1 | 0 | 1 | 1 |
| 11 | 0 | 0 | 0 | 0 | 0 | 0 | 0 | 0 | 0 | 1 | 0 | 0 |
| 12 | 0 | 0 | 0 | 0 | 0 | 0 | 0 | 0 | 0 | 1 | 0 | 0 |

202

203

204

EP 3 355 261 A1

## Fig. 8

210

| CLAIM NUMBER (j) \ CLAIM NUMBER (i) | 1 | 2 | 3 | 4 | 5 | 6 | 7 | 8 | 9 | 10 | 11 | 12 |
|---|---|---|---|---|---|---|---|---|---|---|---|---|
| 1 | 0 | 1 | 0 | 0 | 0 | 0 | 0 | 0 | 0 | 0 | 0 | 0 |
| 2 | 1 | 0 | 1 | 1 | 0 | 0 | 0 | 0 | 0 | 0 | 0 | 0 |
| 3 | 0 | 1 | 0 | 0 | 0 | 0 | 0 | 0 | 0 | 0 | 0 | 0 |
| 4 | 0 | 1 | 1 | 0 | 0 | 0 | 0 | 0 | 0 | 0 | 0 | 0 |
| 5 | 0 | 0 | 0 | 0 | 0 | 1 | 1 | 0 | 0 | 0 | 0 | 0 |
| 6 | 0 | 0 | 0 | 0 | 1 | 0 | 1 | 1 | 0 | 0 | 0 | 0 |
| 7 | 0 | 0 | 0 | 0 | 1 | 1 | 0 | 0 | 1 | 0 | 0 | 0 |
| 8 | 0 | 0 | 0 | 0 | 0 | 1 | 0 | 0 | 0 | 1 | 0 | 0 |
| 9 | 0 | 0 | 0 | 0 | 0 | 0 | 1 | 0 | 0 | 1 | 1 | 1 |
| 10 | 0 | 0 | 0 | 0 | 0 | 0 | 0 | 1 | 1 | 0 | 1 | 1 |
| 11 | 0 | 0 | 0 | 0 | 0 | 0 | 0 | 0 | 0 | 1 | 0 | 0 |
| 12 | 0 | 0 | 0 | 0 | 0 | 0 | 0 | 0 | 0 | 1 | 0 | 0 |

211

212

Fig. 9

# Fig. 10A

BASIC CIRCLE DATA

| NUMBER OF NODES | RADIUS OF BASIC CIRCLE | CENTRAL POINT COORDINATE VALUE |
|---|---|---|
| 12 | 10 | (20, 15) |

# Fig. 10B

NODE CIRCLE DATA

| NODE NUMBER | COORDINATE VALUE | RADIUS |
|---|---|---|
| 1 | (20, 25) | 1 |
| 2 | (25, 23.7) | 1 |
| 3 | (28.7, 20) | 1 |
| ⋮ | ⋮ | ⋮ |

EP 3 355 261 A1

# Fig. 10C

LINK DATA

| NODE CIRCLE NUMBER TO BE CONNECTED | COORDINATE VALUE | |
| --- | --- | --- |
| | START POINT | END POINT |
| 1, 2 | (21, 24.9) | (24.2, 24.1) |
| 2, 3 | (25.8, 23.3) | (28.1, 20.9) |
| ⋮ | ⋮ | ⋮ |

EP 3 355 261 A1

Fig. 11

# Fig. 12A

NODE CIRCLE DATA

| NODE NUMBER | COORDINATE VALUE | RADIUS | ADJUSTED COORDINATE VALUE |
|---|---|---|---|
| 1 | (20, 25) | 1 | – |
| 2 | (25, 23.7) | 1 | – |
| 3 | (28.7, 20) | 1 | (31, 22) |
| ⋮ | ⋮ | ⋮ | ⋮ |

EP 3 355 261 A1

# Fig. 12B

LINK DATA

| NODE CIRCLE NUMBER TO BE CONNECTED | COORDINATE VALUE | | ADJUSTED COORDINATE VALUE | |
|---|---|---|---|---|
| | START POINT | END POINT | START POINT | END POINT |
| 1, 2 | (21, 24.9) | (24.2, 24.1) | – | – |
| 2, 3 | (25.8, 23.3) | (28.1, 20.9) | – | (30.1, 22.4) |
| ⋮ | ⋮ | ⋮ | ⋮ | ⋮ |

EP 3 355 261 A1

Fig. 13A

Fig. 13B

EP 3 355 261 A1

Fig. 13C

## Fig. 14

INFORMATION-PROCESSING DEVICE 400

110 INPUT ACCEPTANCE UNIT

120 CONTROL UNIT

130 CLAIM DATA STORAGE UNIT

410

141 SUBORDINATE RELATIONSHIP EXTRACTION UNIT

412 SUBORDINATE RELATIONSHIP STORAGE UNIT

142 SYMMETRIC MATRIX GENERATION UNIT

144 SYMMETRIC MATRIX STORAGE UNIT

411 HIERARCHICAL INFORMATION EXTRACTION UNIT

CLAIM STRUCTURE EXTRACTION UNIT

420

421 DISPOSITION CONTROL UNIT

422 DISPOSITION DATA GENERATION UNIT

423 DISPOSITION DATA STORAGE UNIT

153 DISPOSTION DATA ADJUSTMENT UNIT

154 DISPOSITION DATA OUTPUT UNIT

CLAIM TREE GENERATION UNIT

160 DISPLAY UNIT

## Fig. 15A

| CLAIM NUMBER | CLAIM NUMBER ON WHICH THE CLAIM OF THE ASSOCIATED CLAIM NUMBER IS DEPENDENT | DEPTH OF HIERARCHY |
|---|---|---|
| 1 | 0 | 1 |
| 2 | 1 | 2 |
| 3 | 2 | 3 |
| 4 | 2 | 3 |
| 5 | 0 | 1 |
| 6 | 5 | 2 |
| 7 | 6 | 3 |
| 8 | 6 | 3 |
| 9 | 0 | 1 |
| 10 | 9 | 2 |
| 11 | 10 | 3 |
| 12 | 10 | 3 |

Fig. 15B

| NODE NUMBER | DEPTH OF HIERARCHY | DISPLAY FORM |
|---|---|---|
| 1, 5, 9 | 1 | DISPLAY NODE IN WHITE |
| 2, 6, 10 | 2 | DISPLAY NODE IN AQUA |
| 3, 4, 7, 8, 11, 12 | 3 | DISPLAY NODE IN BLUE |

Fig. 16

# Fig. 17

Fig. 18

| CLAIM NUMBER | CLAIM NUMBER ON WHICH THE CLAIM OF THE ASSOCIATED CLAIM NUMBER IS DEPENDENT | CATEGORY |
|---|---|---|
| 1 | 0 | method |
| 2 | 1 | |
| 3 | 2 | |
| 4 | 2 | |
| 5 | 0 | device |
| 6 | 5 | |
| 7 | 6 | |
| 8 | 6 | |
| 9 | 0 | storage medium |
| 10 | 9 | |
| 11 | 10 | |
| 12 | 10 | |

EP 3 355 261 A1

# Fig. 19A

| CATEGORY | NODE NUMBER | DISPLAY FORM |
|---|---|---|
| method | 1, 2, 3, 4 | DISPLAY NODE IN WHITE |
| device | 5, 6, 7, 8 | DISPLAY NODE IN AQUA |
| storage medium | 9, 10, 11, 12 | DISPLAY NODE IN BLUE |

EP 3 355 261 A1

# Fig. 19B

| CATEGORY | NODE NUMBER | DISPLAY FORM |
|----------|-------------|--------------|
| method | 1, 2, 3, 4 | DISPLAY BACKGROUND AREA INCLUDING EACH NODE IN YELLOW |
| device | 5, 6, 7, 8 | DISPLAY BACKGROUND AREA INCLUDING EACH NODE IN GREEN |
| storage medium | 9, 10, 11, 12 | DISPLAY BACKGROUND AREA INCLUDING EACH NODE IN RED |

EP 3 355 261 A1

## Fig. 20

EXPLANATORY NOTE

○ method

◌ device

▨ storage medium

Fig. 21

EXPLANATORY NOTE

method

device

storage medium

# Fig. 22A

BASIC POLYGON DATA

| NUMBER OF NODE | NUMBER OF POLYGON-VERTEXES | COORDINATE VALUE OF POLYGON VERTEXES |
|---|---|---|
| 12 | 3 | (11.3, 10), (20, 25), (28.7, 10) |

# Fig. 22B

SIDE DATA

| NUMBER OF NODE DISPOSED ON EACH SIDE | NODE NUMBER | LENGTH OF SIDE |
|---|---|---|
| 4 | 1, 2, 3, 4 | 17.3 |
| 4 | 5, 6, 7, 8 | 17.3 |
| 4 | 9, 10, 11, 12 | 17.3 |

EP 3 355 261 A1

# Fig. 22C

SIDE DATA

| NUMBER OF NODE DISPOSED ON EACH SIDE | NODE NUMBER | LENGTH OF SIDE |
|---|---|---|
| 3 | 1, 2, 3 | 5 |
| 10 | 4–13 | 7 |
| 1 | 14 | 3 |

Fig. 23

Fig. 24A

Fig. 24B

Fig. 24C

# Fig. 25

460

INFORMATION-PROCESSING DEVICE

110
INPUT ACCEPTANCE UNIT

120
CONTROL UNIT

CLAIM DATA STORAGE UNIT
130

470

472
SUBORDINATE RELATIONSHIP STORAGE UNIT

141
SUBORDINATE RELATIONSHIP EXTRACTION UNIT

142
SYMMETRIC MATRIX GENERATION UNIT

144
SYMMETRIC MATRIX STORAGE UNIT

441
CATEGORY INFORMATION EXTRACTION UNIT

471
SIMILARITY ANALYSIS UNIT

CLAIM STRUCTURE EXTRACTION UNIT

150

151
DISPOSITION CONTROL UNIT

152
DISPOSITION DATA GENERATION UNIT

155
DISPOSITION DATA STORAGE UNIT

153
DISPOSTION DATA ADJUSTMENT UNIT

154
DISPOSITION DATA OUTPUT UNIT

CLAIM TREE GENERATION UNIT

481
SIMILARITY DISPLAY CONTROL UNIT

482
SIMILARITY DATA GENERATION UNIT

484
SIMILARITY DATA STORAGE UNIT

160
DISPLAY UNIT

483
SIMILARITY DATA OUTPUT UNIT

SIMILARITY INFORMATION GENERATION UNIT

480

# Fig. 26A

| CLAIM NUMBER | CLAIM NUMBER ON WHICH THE CLAIM OF THE ASSOCIATED CLAIM NUMBER IS DEPENDENT | CATEGORY | SIMILAR CLAIM NUMBER |
|---|---|---|---|
| 1 | 0 | method | 5, 9 |
| 2 | 1 | | 6, 10 |
| 3 | 2 | | 7, 11 |
| 4 | 2 | | 8, 12 |
| 5 | 0 | device | 1, 9 |
| 6 | 5 | | 2, 10 |
| 7 | 6 | | 3, 11 |
| 8 | 6 | | 4, 12 |
| 9 | 0 | storage medium | 1, 5 |
| 10 | 9 | | 2, 6 |
| 11 | 10 | | 3, 7 |
| 12 | 10 | | 4, 8 |

EP 3 355 261 A1

Fig. 26B

| NODE NUMBER | COORDINATE VALUE OF SIMILAR LINK | |
| --- | --- | --- |
| | START POINT | END POINT |
| 1 | (20, 24) | (28.7, 10) |
| | (20, 24) | (12.2, 5.5) |
| 2 | (24.5, 22.8) | (24.5, 7.2) |
| | (24.5, 22.8) | (10, 15) |
| ⋮ | ⋮ | ⋮ |
| | ⋮ | ⋮ |

EP 3 355 261 A1

Fig. 27

EP 3 355 261 A1

Fig. 28

EXPLANATORY NOTE

method

device

storage medium

A

B

## Fig. 29

INFORMATION-PROCESSING DEVICE 500

INPUT ACCEPTANCE UNIT 110

CONTROL UNIT 120

CLAIM DATA STORAGE UNIT 130

140

SUBORDINATE RELATIONSHIP EXTRACTION UNIT 141

SUBORDINATE RELATIONSHIP STORAGE UNIT 143

SYMMETRIC MATRIX GENERATION UNIT 142

SYMMETRIC MATRIX STORAGE UNIT 144

CLAIM STRUCTURE EXTRACTION UNIT

150

DISPOSITION CONTROL UNIT 151

DISPOSITION DATA GENERATION UNIT 152

DISPOSITION DATA STORAGE UNIT 155

DISPOSTION DATA ADJUSTMENT UNIT 153

DISPOSITION DATA OUTPUT UNIT 154

CLAIM TREE GENERATION UNIT

GRAPH DISPLAY CONTROL UNIT 511

LINK NUMBER CALCULATION UNIT 512

NETWORK DENSITY CALCULATION UNIT 513

AVERAGE INTER-VERTEX DISTANCE CAUCULATION UNIT 514

GRAPH DATA STORAGE UNIT 518

CLUSTER NUMBER CALCULATION UNIT 515

GRAPH DATA GENERATION UNIT 516

DISPLAY UNIT 160

GRAPH OUTPUT UNIT 517

GRAPH GENERATION UNIT

510

65

# Fig. 30

| | NUMBER OF NODE | NUMBER OF LINK |
|---|---|---|
| CLAIM DATA No.1 | 11 | 19 |
| CLAIM DATA No.2 | 7 | 11 |
| CLAIM DATA No.3 | 12 | 21 |
| ⋮ | ⋮ | ⋮ |
| CLAIM DATA No.25 | 77 | 126 |

Fig. 31

Fig. 32

Fig. 33

Fig. 34

Fig. 35

CLAIM STRUCTURE ANALYSIS

CLAIM DATA TO BE ANALYZED    610    620 REFERENCE

640    630 DETERMINA-TION

NUMBER OF LINK | NETWORK DENSITY | AVERAGE INTER-VERTEX DISTANCE | NUMBER OF CLUSTER    650

◆ : REFERENCE CASE (SCOPE OF CLAIM FOR PATENT TO BE REFERRED)
◆ : ANALYSIS CASE (SCOPE OF CLAIM FOR PATENT BEING PREPARED)

Graph: NUMBER OF LINK (vertical axis, 0–140) vs NUMBER OF NODE (horizontal axis, 0–80)

Fig. 36

700

SUBORDINATE
RELATIONSHIP
EXTRACTION UNIT — 710

RELATIONSHIP DIAGRAM
GENERATION UNIT — 720

INFORMATION PROCESSING DEVICE

## Fig. 37

Fig. 38A

1 ─┬─ 2 ─┬─ 3

              └─ 4 ── 5

└─ 4

Fig. 38B

## INTERNATIONAL SEARCH REPORT

International application No.

PCT/JP2016/004317

A. CLASSIFICATION OF SUBJECT MATTER
*G06Q50/18*(2012.01)i, *G06F17/30*(2006.01)i

According to International Patent Classification (IPC) or to both national classification and IPC

B. FIELDS SEARCHED

Minimum documentation searched (classification system followed by classification symbols)
G06Q50/18, G06F17/30

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-287012 A (Intec Systems Institute, Inc.), 24 December 2010 (24.12.2010), paragraphs [0032] to [0036], [0064] to [0068], [0141] to [0154]; fig. 12 (Family: none) | 1-15 |
| A | JP 2006-190147 A (Patolis Corp.), 20 July 2006 (20.07.2006), paragraphs [0023] to [0037]; fig. 5 to 10 (Family: none) | 1-15 |

☒ Further documents are listed in the continuation of Box C.　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 December 2016 (12.12.16) | 20 December 2016 (20.12.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

| International application No. |
| --- |
| PCT/JP2016/004317 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2014-2780 A  (IP Street, Inc.),<br>09 January 2014 (09.01.2014),<br>paragraphs [0035] to [0036], [0064] to [0067]<br>& US 2010/0191564 A1<br>paragraphs [0054] to [0055], [0083] to [0086]<br>& US 2011/0145120 A1    & US 2014/0195403 A1<br>& WO 2009/046385 A1      & EP 2206055 A1<br>& CN 101861586 A | 1-15 |
| A | US 2005/0119932 A1  (HAO Ming C. et al.),<br>02 June 2005 (02.06.2005),<br>paragraphs [0024], [0047]<br>(Family: none) | 1-15 |

Form PCT/ISA/210 (continuation of second sheet) (January 2015)

**EP 3 355 261 A1**

**Patent documents cited in the description**

- JP 2011154696 A
- JP 2015188696 A